# EUROPÄISCHE PATENTSCHRIFT

(11) **EP 4 036 201 B1**
(45) Veröffentlichungstag und Bekanntmachung des Hinweises auf die Patenterteilung: **30.04.2025**
(21) Anmeldenummer: 22164258.0
(22) Anmeldetag: 12.02.2021
(51) Int. Cl.: C12C 1/033, C12C 1/067, C12C 1/10

(54) **WEICHE**
STEEPING TANK
LE TREMPAGE

(30) Priorität: 13.02.2020 EP 20157261
(43) Veröffentlichungstag der Anmeldung: 03.08.2022
(62) Teilanmeldung aus: 21704560.8
(73) Patentinhaber: Bühler GmbH, 92339 Beilngries (DE)
(72) Erfinder: KOLB, Johannes, 85051 Ingolstadt (DE)
(74) Vertreter: Vossius & Partner Patentanwälte Rechtsanwälte mbB

(56) Entgegenhaltungen:
- EP-A1- 2 336 458
- DE-A1- 3 615 146
- DE-B- 1 078 518
- DE-B- 1 274 548
- GB-A- 648 711

## Beschreibung

Die vorliegende Offenbarung betrifft eine Mälzereianlage zum Keimen und Darren von Korn. Eine Mälzereianlage kann auch eine Vorrichtung zum Weichen umfassen. Insbesondere betrifft die Offenbarung eine modular aufgebaute Mälzereianlage, die es erlaubt, den Produkt-Batch (die Produktionsmenge pro Batch) stufenweise anzupassen, insbesondere zu vergrößern.

Mälzungsanlagen werden verwendet, um aus dem Rohstoff Getreide den höherwertigen Rohstoff Malz herzustellen. Dieser wird dann zu Produkten wie zum Beispiel Bier, Destillate oder im Lebensmittelbereich weiterverwendet.

Beim Mälzen von Korn zur Herstellung von beispielsweise Bier oder Whisky wird in der Regel Korn unter Wasserbeigabe zunächst eingeweicht und dann unter kontrollierten Temperatur- und Feuchtigkeitsbedingungen zum Keimen gebracht und währenddessen in regelmäßigen Abständen gewendet. Um den Keimprozess zu stoppen und das Malz haltbar zu machen, wird es daraufhin durch Zufuhr von Heißluft getrocknet. Dieser Vorgang wird auch Darren genannt. Hierfür sind je nach Produktionsmenge Anlagen unterschiedlicher Größe vorgesehen.

Damit der Mälzungsprozess starten kann, wird dem Getreide (Gerste, Weizen, Roggen etc.) Wasser zugeführt, um die Keimruhe zu überwinden, so dass das Korn durch Wasseraufnahme zum Sprießen beginnt. Diesen ersten von insgesamt drei Prozessschritten beim Mälzen nennt der Mälzer Weichen.

Das Weichen beginnt mit einer Nassphase in einem zylindrokonischen Edelstahlbehälter, der Weiche genannt wird. In diesem wird das Korn bei einer Wassertemperatur von 15-20 °C getaucht und unter Druckbelüftung in Bewegung gehalten. Ohne das Umwälzen des Produktes während der Nassweiche könnte das Korn aufgrund von Sauerstoffmangel absterben. Nach ca. drei bis fünf Stunden wird das Wasser abgelassen und die erste Trockenweiche beginnt. Diese erfolgt durch Belüftung in Form von Absaugung des entstehenden Kohlendioxids über einen Radialventilator. Die Trockenphase dauert etwa zehn Stunden und es folgt wiederholt eine kürzere Nassphase und anschließend wieder eine Trockenphase. Nachdem das Korn einen Weichgrad von ca. 44 Prozent erreicht hat (abhängig vom Getreide nach ca. 24 Stunden), beginnt der zweite Schritt beim Mälzen, das Keimen.

Das Keimen wird auf einem Hordenboden durchgeführt, auf dem das Korn nach dem Weichprozess überführt wird. Hier liegt es je nach Getreide, Sorte, Jahrgang und Anbaugebiet circa vier bis sechs Tage. Durch ständiges Kühlen und Belüften mit angefeuchteter Luft bei ca. 15-20 °C über einen Radialventilator, kann das Korn weiter wachsen. Während der Keimung wird die Gerüstsubstanz, welche die Stärkezellen festhält, abgebaut und somit das Korn gelöst. Ebenfalls entstehen währen der Keimung Enzyme, welche Stärke in Zucker umwandeln können. Sobald das Korn ausreichend gelöst ist, muss der Prozess des Wachstums mittels Trocknung im dritten und letzten Prozessschritt, dem Darren, gestoppt werden.

Das Darren wird durch Erhöhung des Luftvolumenstroms und einer Temperaturerhöhung auf ca. 50-65 °C für ca. 14 Stunden, eingeleitet. Danach ist das Getreide getrocknet und soll durch noch höhere Temperaturen bei ca. 80-85 °C Farbe und Aroma bilden. Nach etwa sechs Stunden wird dann der Darrprozess durch Frischluftkühlung gestoppt und das Mälzen ist damit beendet. Diese grundsätzlichen Vorgänge beim Mälzen werden beispielsweise in den Veröffentlichungen von Narziss, L.: Malz. In: Heiss, R. (Hrsg.): Lebensmitteltechnologie: Biotechnologische, chemische, mechanische und thermische Verfahren der Lebensmittelverarbeitung, Springer Berlin Heidelberg, 2013, sowie von Narziss, L.: Vom Rohstoff bis zur kalten Würze - Entwicklungen der letzten 25 Jahre, Mitteilungsblatt Deutscher Braumeister- und Malzmeister-Bund, Ausgabe 2, Mai 2018 beschrieben.

Die WO2013/044984A1 beschreibt eine Vorrichtung und ein Verfahren zum Weichen, Keimen, Fermentieren und/oder Kombinationen daraus von Korn, wobei die Vorrichtung einen Behälter mit mindestens einer im Behälter anbringbaren Platte mit mindestens einer Öffnung zur Zu- und/oder Abfuhr von Fluid aufweist. Die EP2336458A1 offenbart einen Rundbehälter, insbesondere einen Keimkasten oder eine Darre in einer Mälzerei, und ein Verfahren zu dessen Herstellung. Mälzereianlagen sind ferner aus den Dokumenten DE1206835B, US2500775A, CN208562299U und DE2656365A1 bekannt. Das Dokument DE1274548B offenbart eine kontinuierlich arbeitende Mälzereianlage.

Kleinmälzungsanlagen unterscheiden sich von industriellen Mälzungsanlagen aufgrund der geringer ausgelegten Jahreskapazität. Eine Kapazitätsgrenze für die Klassifizierung von Kleinmälzungsanlagen liegt im Bereich von ca. 1-50 t/Batch.

Kleinmälzungsanlagen für Versuchs- und Lehrzwecke liegen bei Kapazitäten < 1 t/Batch.

Es gibt drei Mälzungssysteme: Ein-Kammersystem; Zwei-Kammersystem; Drei-Kammersystem.

Unter einem Ein-Kammersystem ist zu verstehen, dass die drei Prozessschritte Weichen, Keimen und Darren in einer Vorrichtung durchgeführt werden. Mit mitteleuropäischer Gerste sind das insgesamt 7 Tage (1 Tag Weichen, 5 Tage Keimen und 1 Tag Darren). Bei 365 Prozesstagen im Jahr können somit maximal 52 Batches produziert werden (365 Tage/7 Tage/Batch). Das Getreide verbleibt während des Mälzungsvorganges in derselben Vorrichtung. Da alle drei Prozessschritte (Weichen, Keimen, Darren) in einer Vorrichtung durchgeführt werden, ist nur eine Batchherstellung möglich. Die Form von Ein-Kammersystemen kann sowohl rechteckige Kästen, als auch zylindrische Tanks umfassen. Beide haben einen Hordenboden, durch welchen das Getreide während des Mälzens mit Prozessluft versorgt wird.

Im Zwei-Kammersystem werden Weichen und Keimen/Darren in unterschiedlichen Kammern durchgeführt. Somit ist die Peripherie für den Prozessschritt Weichen unabhängig von den Prozessschritten Keimen und Darren, welche in einer separaten, gemeinsamen Vorrichtung durchgeführt werden. Allerdings muss das geweichte Getreide von der Weichvorrichtung in die Keim-Darrvorrichtung transportiert werden. Bei 365 Prozesstagen im Jahr, können somit circa 61 Batches produziert werden (365 Tage/6 Tage/Batch). Dies ist möglich, da während der Umstellung von Keimen auf Darren gleichzeitig in der Weichvorrichtung wieder eingeweicht werden kann und deshalb kein zusätzlicher Tag für das Weichen verloren geht. Darren und Weichen kann parallel erfolgen.

Bei Zwei-Kammersystemen wird das Weichen in einem zylindrokonischen Tank durchgeführt und im Anschluss in die kombinierte Keim-Darrvorrichtung überführt. Diese Keim-Darrvorrichtung kann aus einer Trommel bestehen, welche sich zum Wenden des Produkts beim Keimen dreht, bzw. aus einem rechteckigen Kasten, welcher mit einer Wendemaschine ausgestattet ist. Ferner ist ein runder Kasten mit einer Wendemaschine möglich.

Im Drei-Kammersystem sind Weichen, Keimen und Darren getrennt und auch von der Peripherie her unabhängig voneinander. Bei 365 Prozesstagen im Jahr können somit circa 73 Batches produziert werden (365 Tage/5 Tage/Batch). Denn nachdem die Keimvorrichtung auf die Darrvorrichtung entladen ist, kann diese bereits wieder mit Weichgut von der Weiche befüllt werden. Weichen, Keimen und Darren kann also parallel erfolgen.

Das Drei-Kammersystem besteht aus einer zylindrokonischen Weiche und aus entweder eckigen Keimkästen und einer eckigen Darre, oder aus eckigen Keimkästen und einer runden Darre, beziehungsweise aus runden Keimkästen und einer runden Darre.

Insbesondere bei kleinen Mälzereien, beispielsweise zur Herstellung von Spezialmalzen für die Craft Bier Branche, können die Investitionskosten zur Errichtung einer Anlage zu hoch oder die Dimensionierung aufgrund von steigender Nachfrage falsch gewählt sein.

Die Möglichkeit, die Mälzereianlage um eine oder mehrere Anlagenkomponenten zu erweitern, ohne dabei große Investitionen in der Peripherie vornehmen zu müssen, stellt einen ökonomischen und ökologischen Mehrwert dar. Die Mälzereianlage sollte auf einen 24 Stunden Batchrhythmus ausgelegt sein.

Die nicht-erfindungsgemässe Offenbarung bietet eine modular aufgebaute (absichtlich erweiterbare) und kompakte Mälzereianlage, deren Produkt-Batch, also die Produktionsmenge pro Batch, stufenweise und individuell angepasst, insbesondere vergrößert bzw. verkleinert werden kann. Dies wird durch die folgenden Merkmale erreicht. Die Erfindung ist durch die unabhängigen Ansprüche definiert; die abhängigen Ansprüche beschreiben Ausführungsformen der Erfindung.

Die vorliegende Erfindung betrifft eine Weiche zum Weichen von Korn, mit einem Basisabschnitt und einem Deckel, wobei die Kapazität der Weiche stufenweise durch Einsetzen oder Entnehmen von mindestens einem Zwischenring in einem Zwischenabschnitt zwischen dem Basisabschnitt und dem Deckel veränderbar ist. Weitere Ausführungsformen umfassen bevorzugt folgende Merkmale.

Ein Produktablauf kann im Basisabschnitt angeordnet sein. Der Basisabschnitt kann konisch in Richtung des Produktablaufs ausgebildet sein und/oder der Zwischenabschnitt und der mindestens eine Zwischenring können ringförmig ausgebildet sein.

Der Zwischenabschnitt und der mindestens eine Zwischenring kann eine im Querschnitt im Wesentlichen kreisförmige Innenwand aufweisen.

Der Zwischenabschnitt und der mindestens eine Zwischenring kann eine im Querschnitt im Wesentlichen sechseckige Außenwand aufweisen.

Die Weiche kann ferner eine Abschwemmvorrichtung aufweisen, wobei die Abschwemmvorrichtung vorzugsweise vollautomatisch betrieben wird. Die Abschwemmvorrichtung weist bevorzugt einen Sicherheitsüberlauf auf.

Eine Höhe oder Länge der Abschwemmvorrichtung kann in Abhängigkeit der Anzahl der eingesetzten Zwischenringe eingestellt werden.

Der Deckel kann einen Produktzulauf aufweisen. Der Deckel kann eine Einrichtung zur Frischluftzufuhr aufweisen. Die Einrichtung zur Frischluftzufuhr kann ein Kälteregister aufweisen, das konfiguriert ist, Zuluft zu temperieren.

Die Erfindung umfasst ferner ein Verfahren zum Erweitern einer Weiche durch eine stufenweise Veränderung der Kapazität der Weiche durch Einsetzen oder Entfernen von mindestens einem Zwischenring in dem Zwischenabschnitt zwischen dem Basisabschnitt und dem Deckel.

Ein Beispiel der Offenbarung umfasst ferner eine Mälzereianlage zum Keimen und Darren von Korn mit einer Heizeinheit, in der eine Heizeinrichtung, Wärmerückgewinnung und ein zentraler Darr-Ventilator installierbar sind, und mindestens einer Keim-Darreinheit, aufweisend ein Startmodul (Basismodul) mit einem integrierten Luftkanal in Verbindung mit einem Keim-Ventilator, mindestens einem Zwischenmodul und einem Endmodul (Abschlussmodul). Vorgelagert kann eine Weicheinheit angeschlossen sein. Das bzw die Zwischenmodule zwischen Start- und Endmodul bilden einen Prozess- bzw. Behandlungsraum zum Keimen und Darren von Korn. Die Kapazitätsleistung der Mälzereianlage kann durch Ändern der Größe des Prozessraums eingestellt werden. Insbesondere kann zwischen Startmodul und Endmodul mindestens ein weiteres Zwischenmodul eingefügt werden. Das Startmodul, die mindestens zwei Zwischenmodule und das Endmodul sind dann (absichtlich abnehmbar) untereinander verbunden, wobei die Zwischenmodule den Prozessraum bilden. Durch das Einfügen des mindestens einen zusätzlichen Zwischenmoduls kann die Kapazitätsleistung der Mälzereianlage eingestellt und insbesondere erweitert werden

Das Startmodul ist mit der Heizeinheit (absichtlich abnehmbar) verbunden. Der Keim-Ventilator im bzw. in Verbindung mit dem Startmodul leitet während des Keimvorgangs selektiv Frischluft von außen in den Prozessraum und/oder Rückluft vom Prozessraum in diesen wieder zurück. Dabei kann die Luft über ein Kälteregister geführt werden, um die Prozessluft zu kühlen.

Während des Darrvorgangs wird temperierte Luft über insbesondere einen zentralen Darr-Ventilator von der Heizeinheit über einen Frischluftkanal zu dem(den) Keim-Darreinheit(en) geführt und über einen Rückluftkanal wieder der Heizeinheit zurückgeführt. Die Belüftung erfolgt in der Regel über zwei separate Ventilatoren, nämlich den Keim-Ventilator, der insbesondere in dem Startmodul angeordnet ist, und den Darr-Ventilator in der Heizeinheit. Die Luftströmungen können aber auch durch einen einzigen Ventilator erzeugt werden. Ferner wird der Prozessraum durch die Zwischenmodule gebildet. Gemäß einer Ausführungsform der Erfindung können auch Startmodul und/oder Endmodul einen Teil des Prozessraums bzw. Behandlungsraums darstellen.

Weitere Beispiele umfassen bevorzugt folgende Merkmale.

Zwischen Startmodul und Endmodul können mindestens zwei Zwischenmodule eingefügt werden. Die mindestens zwei Zwischenmodule welche mit dem Startmodul und dem Endmodul verbunden sein können, bilden dann den Prozessraum, in welchem das zu vermälzende Produkt liegt (beim Keimen und Darren).

Ein innen im Startmodul integrierter Luftkanal mit einem Keim-Ventilator leitet im Keimprozess Frisch- und/oder Rückluft in den Prozessraum unterhalb der Horde der Zwischenmodulen ein. Auf der Druckseite des Keim-Ventilators kann ein Kälteregister installiert sein, welches von einer Kälteanlage (außerhalb der Keim-Darreinheit aufgestellt) gespeist wird.

Während des Darrprozesses leitet der zentrale Darrventilator von der Heizeinheit temperierte Luft vom Gasbrenner und/oder Heizregister (Heißwasser oder Gas) in den Prozessraum unterhalb der Horde in den Zwischenmodulen ein. In der Heizeinheit kann neben der Heizung auch mindestens ein Kreuzwärmetauscher integriert sein.

Mindestens ein Startmodul kann mittels Verbindungskanäle mit der Heizeinheit verbunden sein.

Eine Kapazitätsleistung von gekeimtem und gedarrtem Korn der Mälzereianlage mit einer Heizeinrichtung kann durch die Anzahl der Prozessmodule von 16 t/Batch und Tag bis 56 t/Batch und Tag einstellbar sein. Die Kapazitätsleistung (t/Tag) von gekeimten und gedarrten Korn pro Keim-Darrkasten kann 16 t bis 56 t, bevorzugt 16 t, 24 t, 32 t, 40 t, 48 t und/oder 56 t, umfassen. Die Mälzereinlage kann bis zu 7 Keim-Darreinheiten pro Heizeinheit umfassen.

Jede Keim-Darreinheit umfasst bevorzugt eine Wendevorrichtung und/oder eine Entladestation. Die Entladestation ist bevorzugt im Startmodul angeordnet.

Der Prozessraum, in dem das zu vermälzende Produkt liegt, wird durch das bzw. die Zwischenmodule gebildet und weist bevorzugt mindestens zwei Zwischenmodule auf. Gegebenenfalls können auch Start und/oder Endmodul zum Prozessraum gehören. Der prozessraum ist bevorzugt rechteckig und kann durch Einsetzen von weiteren Zwischenmodulen die Batchgrößen stufenweise vergrößern.

Die Zwischenmodule haben eine Breite und eine Länge, wobei die Breite der Module bevorzugt im Wesentlichen der Breite des Start- und Endmoduls entspricht und die Länge des Prozessraums abhängig von der Zahl der Zwischenmodule ist.

Das Korn, welches in einem Prozessraum behandelt wird, ist bevorzugt auf einem luftdurchlässigen Hordenboden angeordnet, der den Prozessraum in einen unteren Abschnitt und einen oberen Abschnitt teilt. Der Ventilator ist bevorzugt konfiguriert, die Luft durch den unteren Abschnitt einzuleiten, die Luft durch das Korn strömen zu lassen und durch den oberen Abschnitt zurück zum Ventilator gelangen zu lassen. Dies kann selektiv im Keimprozess durch das Startmodul und im Darrprozess über die Luftkanäle zur Heizeinheit durchgeführt werden.

Die Mälzereianlage kann bevorzugt eine Weiche zum Weichen des Korns aufweisen. Die Weiche kann mit mindestens einer Keim-Darreinheit zum Transport des geweichten Korns in den Prozessraum, also bevorzugt das mindestens eine Zwischenmodul oder aber auch das Basismodul und/oder das Endmodul, verbunden sein. Die Weiche ist bevorzugt stufenweise vergrößerbar ausgebildet.

Die Heizeinheit weist vorzugsweise einen zentralen Darr-Ventilator zum Zirkulieren der in der Heizeinrichtung temperierten Luft auf.

Die Offenbarung umfasst ferner ein Verfahren zum Mälzen von Korn, insbesondere mit einer Mälzereianlage wie oben beschrieben. Das Verfahren kann insbesondere das Weichen, welches stufenweise den Produkt-Batch (Produktionsmenge pro Batch) durch Einsetzen von Zwischenringen vergrößern kann, das Keimen des Korns in den mindestens zwei Zwischenmodulen und/oder das Darren des Korns durch Erhitzen der Luft mittels der Heizeinrichtung aufweisen, die in der Heizeinrichtung integriert ist und mit jedem der mindestens einer Keim-Darreinheit verbunden ist.

Das Verfahren kann unter Verwendung von mindestens einer Weicheinheit, einer Keim-Darreinheit und einer Heizeinheit durchgeführt werden, wobei bei Verwendung nur einer Keim-Darreinheit nur entweder der Keimprozess oder der Darrprozess stattfinden kann. Bei mehreren Keim-Darreinheiten, bis zu 7 Keim-Darreinheiten, kann in einer der Darrprozess stattfinden, während in der (den) andere(n) ein Keimprozess durchgeführt wird.

Die Offenbarung umfasst auch ein Verfahren zum Erweitern einer Mälzereianlage wie oben beschrieben. Das Verfahren umfasst das Erweitern einer Weicheinheit 7 durch stufenweises Einsetzen von Zwischenringen 76 auf den bestehenden Zylinder, und/oder das Erweitern einer bestehenden Keim-Darreinheit 5 durch Verlängern des Prozessraums 6, insbesondere durch Ergänzen von einem oder mehreren Zwischenmodulen 52 und/oder durch Bereitstellen einer zusätzlichen Keim-Darreinheit und Verbinden dieser Zusätzlichen Keim-Darreinheit mit der Heizeinheit.

Es zeigen
Fig. 1 eine schematische Ansicht einer beispielhaften Ausführungsform der Erfindung,
Fig. 2 eine schematische Ansicht einer beispielhaften Ausführungsform der Erfindung im Keimbetrieb,
Fig. 3 eine schematische Ansicht einer beispielhaften Ausführungsform der Erfindung im Darrbetrieb,
Fig. 4 und 5 schematische Draufsichten auf Mälzereianlagen gemäß beispielhaften Ausführungsformen der Erfindung,
Fig. 6 zeigt eine schematische Ansicht einer Mälzereianlage gemäß einer bevorzugten Ausführungsform der vorliegenden Erfindung,
Fig. 7 zeigt schematisch die Heizeinheit der Mälzereianlage gemäß der bevorzugten Ausführungsform der Erfindung,
Fig. 8 schematisch eine Draufsicht auf eine Mälzereianlage gemäß der bevorzugten Ausführungsform der Erfindung,
Fig. 9 eine schematische Ansicht einer beispielhaften Ausführungsform der Erfindung mit einer angeschlossenen Weicheinheit,
Fig. 10 eine schematische Ansicht einer erweiterbaren Weicheinheit, und
Fig. 11 schematisch die Erweiterung der Kapazität einer Keim-Darreinheit.

Damit der Mälzungsprozess starten kann, wird dem Getreide Wasser zugeführt, um die Keimruhe zu überwinden, so dass das Korn durch Wasseraufnahme zu Sprießen beginnt. Um eine ausreichende Wasseraufnahme sicherzustellen, kann insbesondere eine bekannte Weiche verwendet werden. Hierbei wird, um den Feuchtigkeitsgehalt im Korn zu erhöhen, dieses in Wasser eingeweicht. Das Weichen von Korn und die entsprechenden Vorrichtungen sind aus dem Stand der Technik bekannt. Alternativ oder zusätzlich kann auch eine Waschschnecke verwendet werden. Die Wasseraufnahme kann auch in dem später beschriebenen Behandlungsraum vorgenommen werden. Vorzugsweise wird für die vorliegende Erfindung das Korn nass geweicht und mit Flüssigkeit gepumpt. Die Weiche kann dabei in einem separaten Gebäude angeordnet und über Rohrleitungen mit der Mälzereianlage verbunden sein.

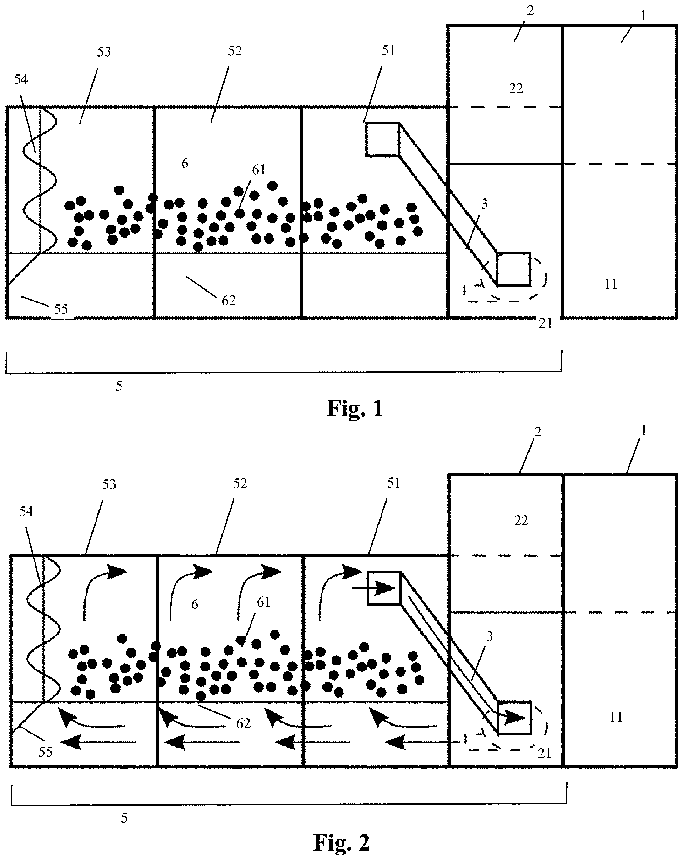

Eine beispielhafte Mälzereianlage gemäß der vorliegenden Offenbarung wird in Fig. 1 gezeigt und umfasst ein Heizgebäude 1, in dem eine Heizeinrichtung 11 installiert ist, sowie ein Prozessmodul 5. Sowohl Heizgebäude 1 als auch Prozessmodul 5 können in mehrfacher Ausführung bereitgestellt werden.

Das Prozessmodul 5 kann den Anforderungen der jeweiligen Anlage angepasst werden und umfasst entsprechend ein Luftgebäude 2 mit einem Ventilator 21 sowie einen Keim-Darrkasten. Der Keim-Darrkasten ist ein standardisierter Saladin-Kasten (siehe beispielsweise Bergner, K.G. et al.: Alkoholische Genussmittel, Springer Berlin Heidelberg, 2013 (Handbuch der Lebensmittelchemie). Als Saladin-Kasten wird ein feststehender Hordenboden bezeichnet, auf dem das Produkt liegt und mit Luft durchströmt wird.

Der Keim-Darrkasten wird durch ein Basismodul 51 und ein Abschlussmodul 53 gebildet und kann gegebenenfalls durch ein oder mehrere Zwischenmodule 52, die zwischen Basismodul 51 und Abschlussmodul 53 eingefügt werden, ergänzt werden. Das Basismodul 51, das Abschlussmodul 53 und gegebenenfalls das Zwischenmodul 52 bzw. die Zwischenmodule 52 sind untereinander verbunden und stellen in deren Inneren einen Behandlungsraum 6 bereit, in dem das Keimen und Darren des Korns durchgeführt werden kann. Das Basismodul 51 ist ferner mit dem Luftgebäude 2 verbunden.

Bevorzugt weist jedes Basismodul 51, Zwischenmodul 52 und Abschlussmodul 53, im Folgenden auch als "Module" bezeichnet, die gleichen Abmessungen auf. Bevorzugt sind die Module rechteckig ausgeführt. Ferner können sie aus rostfreiem Edelstahl oder Blech-Biegeteilen oder Stahlträgern gebildet sein. Jedes Abschlussmodul 53 ist dabei im Betrieb an drei Seiten geschlossen und über die offene Seite mit anderen Modulen verbindbar. Bevorzugt ist an der der offenen Seite gegenüberliegenden Seite eine Entladestation oder Klappe 55 angeordnet. Das Basismodul 51 ist an einer Seite mit dem Luftgebäude 2 verbunden und an der gegenüberliegenden Seite offen und somit mit anderen Modulen verbindbar. Die offene Seite des Basismoduls 51 kann entweder direkt mit dem Abschlussmodul 53 oder mit dazwischen gelagerten Zwischenmodulen 52 verbunden werden. Jedes der Zwischenmodule 52 ist somit an zwei Seiten offen, damit es zwischen Basismodul 51 und Abschlussmodul 53 angeordnet werden kann.

Bevorzugt weisen die Module eine Höhe von etwa 4,8 m, eine Breite von etwa 4,2 m auf und eine Länge von etwa 4,5 m auf. Maximal können 5 Zwischenmodule mit einer Länge von jeweils 4,5 m verwendet werden, was einer Gesamtlänge (Basismodul, 5 Zwischenmodule und Abschlussmodul) von7 x 4,5 m = 31,5 m entspricht. Insbesondere umfasst bevorzugt jedes der Module eine Kapazität von 5 bis 10 t, besonders bevorzugt 8 t. Spezifische Dichten von Getreide belaufen sich auf 45 - 54 kg/hl für Hafer, 57 - 70 kg/hl für Gerste, 58 - 77 kg/hl für Roggen und 62 - 87 kg/hl bei Weizen. Auch andere Abmessungen der Module können zweckdienlich sein.

Im Luftgebäude 2 können ein Wärmetauscher 22 und/oder eine Kälteanlage (nicht gezeigt) oder ein Kälteregister installiert sein. Als Kältetechnik für die Keimluft kann beispielsweise ICS COOL ENERGY, **iC530** / **iC660** eingesetzt werden (https://www.icscoolenergy.com/app/uploads/Broschuere I-Chiller_ICSCoolEnergy_2018.pdf). Desweiteren umfasst die Mälzereianlage bzw. das Prozessmodul 5 einen Luftkanal 3, der den Ventilator 21 bzw. das Luftgebäude 2 mit dem Keim-Darrkasten verbindet. In der Regel ist die Kälteanlage außerhalb des Prozessmoduls 5, und das Kälteregister beispielsweise im Ventilatorraum oder auch im Luftkanal 3 oder mit diesem verbunden angeordnet. Der Luftkanal 3 ist bevorzugt außerhalb des Prozessmoduls 5 angebracht. Besonders bevorzugt ist der Luftkanal 3 außerhalb und seitlich des Prozessmoduls 5 angebracht.

Als Heizeinrichtung 11 im Heizgebäude 1 kann beispielsweise ein Brenner, ein Heißwasserregister oder ein Boiler verwendet werden. Weiterhin können andere Heizquellen, wie beispielsweise Geothermie (Erdwärme), Wärmepumpen oder Solaranlagen verwendet werden. Ein zusätzlicher Wärmetauscher 22 kann beispielsweise die Abwärme benachbarter Industrien zur Erhöhung des Wirkungsgrades nutzen. Dieser kann im Heizgebäude 1 beziehungsweise in Verbindungskanälen untergebracht werden. Bei Verwendung eines Wärmetauschers 22 wird vorwiegend die Abluft während des Schwelkvorganges beim Darren verwendet, um die Frischluft im Kreuzstromverfahren aufzuwärmen. Der Wärmetauscher 22 ist dabei bevorzugt versetzt zur Heizeinrichtung 11, also nicht im Heizgebäude 1, angeordnet.

In dem aus den Modulen 51, 53 und falls vorhanden zusätzlich Modul(en) 52 aufgebauten Keim-Darrkasten wird das Malz zum Keimen gebracht und anschließend getrocknet bzw. gedarrt. In der Regel ist dort ein luftdurchlässiger Hordenboden 62 angebracht, der den Behandlungsraum 6 in einen oberen und einen unteren Bereich teilt. Das Produkt 61 ist bevorzugt im oberen Bereich angeordnet und Luft wird in den unteren Bereich eingeleitet und kann durch den Hordenboden 62 in das Produkt 61 eindringen. Die Luft kann dabei je nach den Anforderungen temperiert werden. Bevorzugt verbindet der Luftkanal 3 das Luftgebäude 2 mit dem Basismodul 51. Dabei ist der obere Bereich des Behandlungsraums 6 des Basismoduls 51 über den Luftkanal 3 mit dem Ventilator 21 im Luftgebäude 2 verbunden, der die Luft in den unteren Bereich des Behandlungsraums 6 transportiert. Mit anderen Worten wird die Abluft, die das Produkt 61 bereits passiert hat, aus dem oberen Bereich des Behandlungsraums 6 herausgeleitet und über den Ventilator 21 in den unteren Bereich des Behandlungsraums 6 rezirkuliert. Je nach Betriebsart kann die Abluft durch den Luftkanal 3 oder den Wärmetauscher 22 und die Heizeinrichtung 11 zum Ventilator 21 geleitet werden. Hierzu können Vorrichtungen, insbesondere Abschlussklappen verwendet werden, die einerseits während des Keimens die Zuführung zum Basismodul 51 aus Richtung Wärmetauscher 22 bzw. Heizgebäude 1 verhindern und andererseits während des Darrens den Eintritt in den Luftkanal 3 bzw. von dem Luftkanal 3 in den Ventilatorraum unterbinden.

Dabei kann die Luft durch den Ventilator wahlweise unverändert zirkuliert werden oder mittels der Kälteanlage 23 oder der Heizeinrichtung 11 im Heizgebäude 1 temperiert werden. Im Luftgebäude 2 kann ferner ein Wärmetauscher 22 angeordnet sein, um den Wirkungsgrad zu erhöhen. Dieser kann insbesondere als Kreuzwärmetauscher ausgeführt sein. Somit kann sowohl das Keimen als auch das Darren mit demselben Ventilator 21 durchgeführt werden. Bevorzugt sind im Luftgebäude 2 insbesondere am Ventilator 21 Mittel vorgesehen (nicht gezeigt), um die Luft selektiv aus dem Luftkanal 3 (Umluft- oder Kühlbetrieb) oder dem Heizgebäude 1 bzw. der Heizeinrichtung 11 (Heizbetrieb) oder aus der Umgebung (Außenluft) in den Behandlungsraum 6 zu befördern. Insbesondere können diese Mittel als Jalousien oder Klappen ausgeführt sein. Auch andere Vorrichtungen können zweckdienlich sein. Der Luftkanal 3 kann ferner eine Rückluftklappe, eine Frischluftklappe, einer Überdruckjalousie o.ä. aufweisen, um eine korrekte Luftzusammensetzung zu gewährleisten. Gemäß der beispielhaften Ausführungsform kann abhängig von den Umgebungsbedingungen Abluft aus dem Behandlungsraum 6 zirkuliert werden oder mit Frischluft gemischt werden. Ferner kann die Luft klimatisiert werden, um gleich bleibende Bedingungen gewährleisten zu können. Beispielsweise ist es in kalten Regionen während des Keimens möglicherweise nicht notwendig, die Außenluft zusätzlich zu kühlen. Im Gegenzug kann in kalten Regionen im Winter das Kälteregister auch mit Warm-/Heißwasser gefahren werden um die Frischluft/Außenluft anzuwärmen um auf die gewünschte Temperatur von 15 - 20°C zu kommen. Bevorzugt ist in der Anlage ein Temperatur- und/oder Feuchtigkeitssensor angebracht, um die Luftparameter überwachen zu können. Dieser kann im Luftkanal 3 und/oder im Luftgebäude 2 und/oder im Heizgebäude 1 und/oder im Behandlungsraum 6 über und/oder unter der Horde angebracht sein. Ferner kann es vorteilhaft sein, die Bedingungen im Behandlungsraum 6 mit einem weiteren Sensor zu überwachen. Es können auch Sensoren vorgesehen sein, die direkt mit dem Produkt 61 in Kontakt stehen.

Ein beispielhafter Luftvolumenstrom während des Keimens beträgt bevorzugt 600 m³/h pro Tonne Getreide. Der Luftvolumenstrom erhöht sich nahezu linear in Abhängigkeit von der Getreidemenge. Während des Darrens wird der Luftvolumenstrom bevorzugt auf ca. 3500 m³/h pro Tonne Getreide erhöht. Auch hier kann der benötigte Volumenstrom nahezu linear anhand der Produktmenge berechnet werden. Die Temperaturen während des Keimens bzw. Darrens können je nach gewünschtem Produkt sehr unterschiedlich ausfallen. Die Temperatur beträgt während des Keimens insbesondere 15 -20 °C, während des Darrens insbesondere 80 - 120 °C.

Um eine gleichmäßige Keimung und Trocknung gewährleisten zu können, wird das Korn bzw. Malz mittels einer Wendevorrichtung 54 gewendet. Diese kann beispielsweise als schneckenförmige Wendevorrichtung 54 ausgeführt sein und durch an den Seitenwänden der Module angebrachte Laufschienen durch den gesamten Behandlungsraum 6, insbesondere dessen gesamte Länge geführt bewegt werden. Eine geeignete Wendevorrichtung wird durch die Patentanmeldung EP 19 16 4503.5, angemeldet am 22. März 2019 durch die Bühler GmbH beschrieben. Das Korn kann auch während des Keimprozesses befeuchtet werden. Im Abschlussmodul 53 kann ferner eine Entladestation, beispielsweise in Form einer Klappe 55, angeordnet sein, die es erlaubt, das fertige Produkt 61 zu entnehmen und weiter zu verarbeiten.

Soll die Größe der Mälzereianlage beispielsweise aufgrund gestiegener Nachfrage verändert werden, können ein oder mehrere Zwischenmodule 52 hinzugefügt oder entfernt werden, sofern die Heizkapazität der Heizeinrichtung 11 dies zulässt, d.h. ausreichend Hitze für die Behandlungsraumgröße zur Verfügung stellen kann.

Ferner können weitere Prozessmodule 5 mit einem Heizgebäude 1 verbunden werden, so dass mehrere Chargen gleichzeitig verarbeitet werden können. Dabei muss lediglich beachtet werden, dass die Größe der zusätzlichen Prozessmodule 5 die Heizkapazität der Heizeinrichtung 11 nicht übersteigt.

Die Prozessmodule 5 umfassen somit bevorzugt als Basiskonfiguration je ein Luftgebäude 2 mit Ventilator 21, ein Basismodul 51 und ein Abschlussmodul 53. Die Prozessmodule 5 können je nach Anforderung ferner ein oder mehrere Zwischenmodule 52 und/oder einen Wärmetauscher 22 aufweisen.

Falls ein Heizgebäude 1 bereitgestellt wird, ist ein Prozessmodul 5 mit dem Heizgebäude 1 verbunden, während mögliche weitere Prozessmodule 5 über einen oder mehrere Verbindungskanäle 4 und Rückführkanäle 41 mit dem Heizgebäude verbunden sind. In diesem Beispiel ist nur in dem mit dem Heizgebäude 1 verbundenen Luftgebäude 2 ein Wärmetauscher 22 angeordnet.

Falls zwei Heizgebäude 1 bereitgestellt werden, sind zwei Prozessmodule 5 je mit einem der Heizgebäude 1 verbunden und weisen je einen Wärmetauscher auf. Falls weitere Prozessmodule 5 in der Anlage vorgesehen sind, sind diese über einen oder mehrere Verbindungskanäle 4 und Rückführkanäle 41 mit den Heizgebäuden 1 verbunden. Bevorzugt sind auch bei der Heizgebäude 1 untereinander durch einen Verbindungskanal 4 verbunden.

Die Anlage kann somit mit einer beliebigen Anzahl Heizgebäuden 1 und Prozessmodulen 5 aufgebaut und den Anforderungen entsprechend erweitert oder verkleinert werden.

Fig. 2 veranschaulicht den Betrieb einer beispielhaften Ausführungsform im Keimmodus. Gleiche oder ähnliche Elemente werden mit den gleichen Bezugszeichen wie in Fig. 1 versehen. In einer Weiche, die auch Teil der Mälzereianlage sein kann, wird Korn geweicht und so für die nachfolgende Verarbeitung vorbereitet. In der Weiche vorbereitetes Korn wird zu der Mälzereianlage befördert. Beispielsweise kann das Korn durch mit der Mälzereianlage verbundene Rohrleitungen zusammen mit dem Weichwasser in ein Basismodul 51 und/oder ein Abschlussmodul 53 und/oder soweit vorhanden in einen oder mehrere Zwischenmodulen 52, also in den Behandlungsraum 6 zum Keimen und Darren befördert werden. Mehrere Module 51, 52, 53 (Behandlungsräume 6) können nacheinander befüllt werden. Im anschließenden Keimbetrieb wird, wie oben beschrieben, durch den Ventilator 21 Luft in den unterhalb des Hordenbodens 62 gelegenen Bereich des Behandlungsraums 6 geleitet. Die Luft kann durch den Hordenboden 62 das Produkt 61 von unten durchdringen. Nach dem Passieren des Produkts wird die Abluft durch den Luftkanal 3 zum Ventilator 21 geführt, wo sie rezirkuliert und/oder temperiert und/oder mit Frischluft gemischt wird. Das Temperieren kann dabei abhängig von den Bedingungen der Außenluft das Kühlen mittels der Kälteanlage 23 bzw. das Erwärmen der Keimluft durch Umfunktionieren des Kälteregisters der Kälteanlage zu einem Warmwasserregister oder Heizen mittels der Heizeinrichtung 11 umfassen. Ferner kann die Abluft auch abgeführt werden und nur Frischluft in den Behandlungsraum 6 eingeleitet werden.

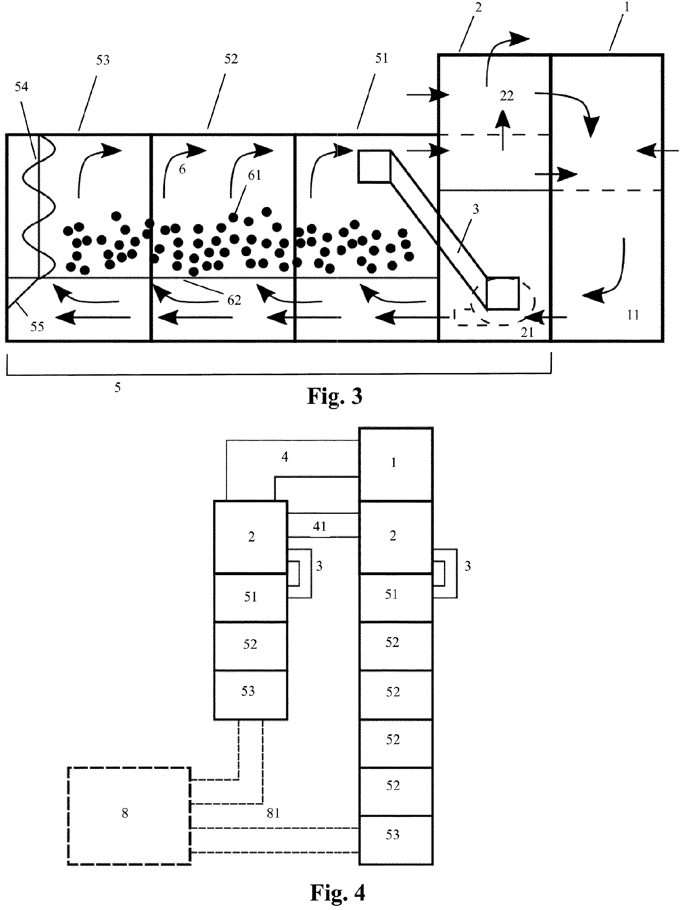

Fig. 3 verdeutlicht die Luftzirkulation einer beispielhaften Ausführungsform im Darrbetrieb. Gleiche oder ähnliche Elemente werden mit den gleichen Bezugszeichen wie in den Fig. 1 und 2 versehen. Hierfür wird von der Heizeinrichtungen 11 geheizte Luft mittels des Ventilators 21 in den unterhalb des Hordenbodens 62 gelegenen Bereich des Behandlungsraums 6 geleitet und kann durch den Hordenboden 62 das Produkt 61 durchdringen. Danach wird die Abluft dem Wärmetauscher 22 zugeführt. Dort kann beispielsweise Wärmerückgewinnung oder Wärmeerhalt unter Zufuhr von Frischluft durchgeführt werden. Die Luft wird dann in der Heizeinrichtung 11 erhitzt und durch den Ventilator 21 wieder in den Behandlungsraum 6 geleitet. Bevorzugt ist im Darrbetrieb der Luftkanal 3 geschlossen und/oder wird nicht verwendet.

Nach Abschluss des Darrvorgangs kann das Produkt 61 manuell oder automatisiert über die Klappe 55 aus dem Behandlungsraum 6 entfernt werden.

Im Folgenden wird ein Beispiel beschrieben, in dem die Kapazität der Mälzereianlage vollständig ausgenutzt wird. In diesem Beispiel wird angenommen, dass Chargen à 24 t mit einer Keimdauer von 5 Tagen zuzüglich eines Tages zum Darren produziert werden. Je nach gewünschtem Produkt 61 und Region kann die Keimdauer abweichen. Ferner wird angenommen, dass jedes Modul eine Kapazität von 8 t hat. Um durchgängig und bei voller Auslastung die beispielhaft gewünschten Chargen à 24 t produzieren zu können, muss die beispielhafte Mälzereianlage sechs Prozessmodule 5 aufweisen, die jeweils aus einem Luftgebäude 2, einem Basismodul 51, einem Zwischenmodul 52 und einem Abschlussmodul 53 bestehen. Ferner muss die Anlage ein Heizgebäude 1 mit einer Heizeinrichtung 11 aufweisen, die für 24 t Produkt ausreichend dimensioniert ist. Es können auch zwei Heizgebäude 1 verwendet werden, die gemeinsam eine ausreichende Heizkapazität für 24 t Produkt bereitstellen. Jedes der sechs Luftgebäude 2 muss ferner mit dem zentralen Heizgebäude 1 oder den beiden Heizgebäuden 1 verbunden werden. Während der Produktion ist in rotierender Weise eines der Prozessmodule 5 im Darrmodus und bezieht Wärme aus dem Heizgebäude 1, während die verbleibenden fünf Prozessmodule 5 jeweils um einen Tag versetzt im Keimmodus sind und sich somit im Umluft- oder Kältebetrieb befinden. Das Prozessmodul 5, in welchem Korn gedarrt wurde, wird nach der Entleerung mit neuem Korn zum Keimen befüllt und das Prozessmodul 5, in welchem das Korn 5 Tage gekeimt hat, wird in den Darrmodus versetzt. Auf diese Weise kann kontinuierlich und platzoptimiert produziert werden.

Figur 4 zeigt eine schematische Draufsicht auf eine Mälzereianlage gemäß einer beispielhaften Ausführungsform der Erfindung. Gleiche oder ähnliche Elemente werden mit den gleichen Bezugszeichen wie in den vorherigen Figuren versehen. Bezüglich der funktionellen Merkmale wird auf die Beschreibung oben verwiesen. Gemäß dieser Ausführungsform weist die Mälzereianlage ein Heizgebäude 1 auf, das mit einem Luftgebäude 2 verbunden ist. Mit diesem ersten Luftgebäude 2 sind ein Basismodul 51, ein Abschlussmodul 53 sowie vier Zwischenmodule 52 verbunden, die gemeinsam den Behandlungsraum 6 bilden. Das Luftgebäude 2 ist über einen Luftkanal 3 mit dem Basismodul 51 verbunden.

Zusätzlich umfasst die Mälzereianlage ein weiteres Luftgebäude 2 mit jeweils einem Basismodul 51, einem Zwischenmodul 52 sowie einem Abschlussmodul 53. Auch hier sind Luftgebäude 2 und Basismodul 51 mittels eines Luftkanals 3 verbunden. Da das zweite Luftgebäude 2 jedoch nicht über eine eigene Heizeinrichtung 11 verfügt, kann Heißluft vom Heizgebäude 1 über einen Verbindungskanal 4 in das zweite Luftgebäude 2 transportiert werden. Eine Wärmerückführung kann über einen Rückführkanal 41 zwischen dem ersten und dem zweiten Luftgebäude 2 durchgeführt werden. Somit können mit einer Heizeinrichtung 1 zwei Behandlungsräume 6 mit Hitze versorgt werden. Wie oben beschrieben ist die gezeigte Mälzereianlage modular und absichtlich-erweiterbar ausgeführt.

Die Anlage kann ferner mit einer Röstanlage 8 verbunden sein oder eine Röstanlage 8 aufweisen. Hierfür können ein oder mehrere Transportvorrichtungen 81 vorgesehen sein, die das fertige Produkt, also insbesondere Grünmalz (d.h. gekeimtes Produkt, welches noch nicht gedarrt wurde) zur Herstellung von Karamellmalzen oder Darrmalz (fertig abgedarrtes Produkt, d.h. nach dem Darren) zur Herstellung von Röstmalzen in die Röstanlage 8 zur Weiterverarbeitung transportieren. Die Transportvorrichtungen 81 können, wie gezeigt, an den Abschlussmodulen 53 vorgesehen; gemäß einer später noch zu beschreibenden Ausführungsform sind die Transportvorrichtungen 81 an den Basis- bzw. Startmodulen 51 vorgesehen. Somit kann über die Entladestation 55 das Produkt aus dem Behandlung- bzw. Prozessraumraum entfernt und in die Röstanlage 8 weiter transportiert werden.

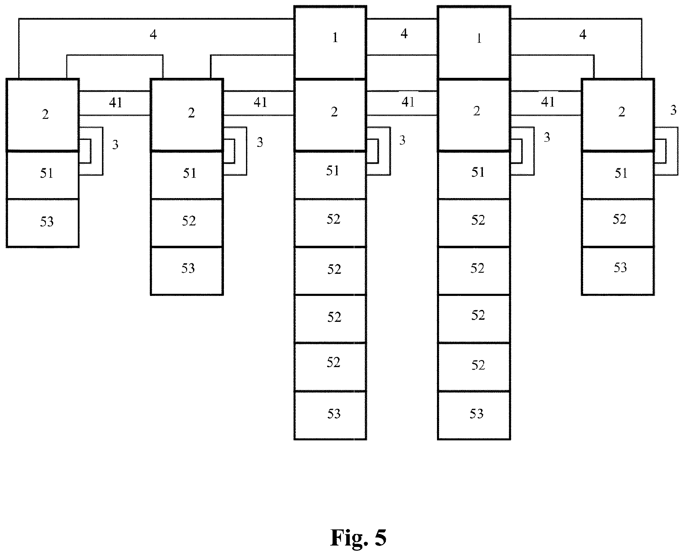

Figur 5 ist eine beispielhafte Ausführungsform zur Verdeutlichung der Erweiterungsmöglichkeiten der vorliegenden Erfindung. Gleiche oder ähnliche Elemente werden mit den gleichen Bezugszeichen wie in den vorherigen Figuren versehen. Wie oben beschrieben kann die Anlage modular erweitert oder verkleinert werden. In diesem Beispiel kann jedes Modul bis zu 8 t Produkt fassen. Die in Figur 5 gezeigte Mälzereianlage weist zwei Heizgebäude 1 sowie fünf Prozessmodule 5 auf. Jedes der Prozessmodule 5 weist ein Luftgebäude 2 mit einem Ventilator 21 auf, wobei lediglich die direkt mit den Heizgebäuden 1 verbundenen Luftgebäude 2 zusätzlich Wärmetauscher 22 aufweisen. Die verbleibenden drei Luftgebäude 2 sind über den Verbindungskanal 4 mit den Heizgebäuden 1 verbunden und können durch den jeweiligen Ventilator 21 die Hitze in den Behandlungsraum 6 einleiten. Eine Wärmerückführung kann über den Rückführkanal 41 bewerkstelligt werden, der wiederum alle Luftgebäude 2 miteinander verbindet.

Jedes der Luftgebäude 2 ist über einen Luftkanal 3 mit dem zugehörigen Basismodul 51 verbunden. Das Prozessmodul 5 links weist lediglich die Minimalkonfiguration auf, die aus einem Luftgebäude 2, Basismodul 51 und Abschlussmodul 53 besteht, und hat somit ein Fassungsvermögen von 16 t Produkt. Das Luftgebäude 2 weist keinen Wärmetauscher 22 auf. Das daneben gelegene Prozessmodul 5 hat zusätzlich zur Minimalkonfiguration ein Zwischenmodul 52, wodurch sich eine Chargengröße von 24 t ergibt. Beide mit einem Heizgebäude 1 ausgestatteten Prozessmodule 5 haben eine Kapazität von jeweils 48 t (vier Zwischenmodule 52). Das letzte Prozessmodul 5 rechts hat eine Größe von 24 t.

Da im vorliegenden Beispiel die Heizeinrichtungen 11 jeweils auf eine Maximalkapazität von 32 t eingerichtet sind, können bei Verwendung nur einer Heizeinrichtung 11 beide großen Prozessmodule 5 nicht ausreichend mit Hitze versorgt werden. Daher können gemäß der vorliegenden Erfindung die Heizgebäude 1 über den Verbindungskanal 4 zusammengeschaltet werden und abhängig davon, welches Prozessmodul 5 im Darrmodus betrieben wird, durch den Betrieb nur einer oder beider Heizeinrichtungen 11 eine ausreichende Hitze bereitgestellt werden.

Die beschriebenen Beispiele verdeutlichen die Vielseitigkeit der vorliegenden Erfindung. Weiterhin können, wie oben beschrieben, die in Fig. 4 und 5 gezeigten Konfigurationen unter Berücksichtigung der Heizkapazität erweitert oder verkleinert werden. Somit kann die Heiztechnik geteilt werden, wodurch Wartungs- und Anschaffungskosten eingespart werden. Dafür kann der in jedem Prozessmodul vorgesehene Ventilator sowohl zum Heizen als auch zum Kühlen verwendet werden. Die Bereitstellung eines Luftkanals pro Prozessmodul gewährleistet die Unabhängigkeit der einzelnen Prozessmodule. Der pro Heizeinrichtung (Brenner) vorgesehene Wärmetauscher kann den Wirkungsgrad der Anlage erhöhen. Je nach Klima und Umgebungstemperatur, d.h. Standort der Anlage, kann Außenluft verwendet, der zirkulierenden Luft beigemischt oder temperiert werden.

Auch kann das Heizgebäude 1 bzw. die Heizgebäude 1 separat vom Luftgebäude 2 vorgesehen sein. In diesem Fall würden das/die Luftgebäude 2 mittels Verbindungskanälen 4 mit dem oder den Heizgebäude(n) 1 verbunden sein. Desweiteren kann auch der Wärmetauscher 22 losgelöst von Luftgebäude 2 und/oder Heizgebäude 1 vorgesehen sein. Sofern das Heizgebäude 1 losgelöst vom Luftgebäude 2, also nicht verbunden, sondern separat aufgestellt ist, kann ein zentrales Heizregister (Heißwasser oder Dampf) und/oder ein zentraler Gasbrenner für alle Prozessmodule vorgesehen sein

Es kann auch vorteilhaft sein, dass nur ein zentraler Ventilator im Heizgebäude 1 vorgesehen ist, welcher die Heißluft zum Darren in das oder die Luftgebäude 2 bzw. Behandlungsräume 6 verteilt. Bei der Verwendung von mehreren Heizgebäuden 1 kann pro Heizgebäude 1 ein Ventilator verbaut sein. Zusätzlich können dann pro Modulgruppe Ventilatoren vorgesehen sein, die die Keimluft zirkulieren.

Die vorliegende Offenbarung umfasst auch ein entsprechendes Verfahren zum Mälzen von Korn sowie ein Verfahren zum Erweitern einer Mälzereianlage.

Insbesondere wird für das Verfahren bevorzugt eine Mälzereianlage wie oben beschrieben verwendet. Das Verfahren umfasst das Keimen des Korns in dem Prozessmodul und das Darren des Korns durch Erhitzen der Luft mittels der mindestens einen Heizeinrichtung, die in dem mindestens einen Heizgebäude angeordnet ist und mit jedem der mindestens einen Prozessmodule verbunden ist.

Wenn eine Mälzereianlage mindestens zwei Prozessmodulen umfasst, kann während des Darrens von Korn in einem der mindestens zwei Prozessmodule das Keimen von Korn in dem anderen Prozessmodul oder den anderen der mindestens zwei Prozessmodule durchgeführt wird.

Das Verfahren zum Erweitern einer Mälzereinanlage wie oben beschrieben umfasst das Erweitern eines bestehenden Prozessmoduls durch Verlängern des Prozessmoduls, insbesondere durch Ergänzen von einem oder mehreren Zwischenmodulen und/oder durch Bereitstellen eines zusätzlichen Prozessmoduls und Verbinden des zusätzlichen Prozessmoduls mit dem Heizgebäude.

Die folgenden Aspekte beschreiben Ausführungsformen der vorliegenden Erfindung.
1. Mälzereianlage zum Keimen und Darren von Korn, mit
   mindestens einem Heizgebäude (1), in dem eine Heizeinrichtung (11) installierbar ist, mindestens einem Prozessmodul (5) bestehend aus
      - einem Luftgebäude (2) mit einem Ventilator (21),
      - einem Basismodul (51),
      - einem Abschlussmodul (53),
   wobei das Luftgebäude (2) und das Basismodul (51) verbunden sind, und wobei das Basismodul (51) und das Abschlussmodul (53) verbunden sind und einen Behandlungsraum (6) zum Keimen und Darren von Korn bilden,
   wobei das Luftgebäude (2) mit dem Heizgebäude (1) verbunden ist, und
   wobei der Ventilator (21) konfiguriert ist, selektiv
      - während des Keimvorgangs des Korns Luft von außerhalb des Luftgebäudes (2) in den Behandlungsraum (6) zu leiten und/oder Luft vom Behandlungsraum (6) im Behandlungsraum (6) zu zirkulieren und
      - während des Darrvorgangs des Korns durch die Heizeinrichtung (11) temperierte Luft in den Behandlungsraum (6) zu leiten.
2. Mälzereianlage nach Aspekt 1, wobei zwischen Basismodul (51) und Abschlussmodul (53) mindestens ein Zwischenmodul (52) eingefügt werden kann,
   wobei das Basismodul (51), das Abschlussmodul (53) und das mindestens eine Zwischenmodul (52) untereinander verbunden sind und den Behandlungsraum (6) bilden.
3. Mälzereinanlage nach einem der Aspekte 1 oder 2, wobei ein außen an dem Prozessmodul (5) angebrachter Luftkanal (3) das Basismodul (51) und das Luftgebäude (2) verbindet und konfiguriert ist, Abluft aus dem Behandlungsraum (6) zum Ventilator (21) zu leiten und/oder heiße Luft von der Heizeinrichtung einzuleiten.
4. Mälzereinanlage nach einem der vorstehenden Aspekte, wobei im Luftgebäude (2) ein Wärmetauscher (22) und/oder eine Kälteanlage (23) zur Temperierung der Umgebungsluft installierbar sind.
5. Mälzereianlage nach einem der vorstehenden Aspekte, wobei eines der Luftgebäude (2) direkt mit dem mindestens einen Heizgebäude (1) und jedes weitere der Luftgebäude (2) mit einem weiteren Heizgebäude (1) oder mittels eines Verbindungskanals (4) zwischen Luftgebäude (2) und Heizgebäude (1) mit dem Heizgebäude (1) verbunden ist.
6. Mälzereianlage nach einem der vorstehenden Aspekte, wobei eine Kapazitätsleistung von gekeimtem und gedarrtem Korn der Mälzereianlage mit einer Heizeinrichtung (11) durch die Anzahl der Prozessmodule (5) von 16 t/Batch und Tag bis 56 t/Batch und Tag einstellbar ist, und/oder
   wobei die Kapazitätsleistung (t/Tag) von gekeimten und gedarrten Korn pro Prozessmodul (5) 16 t bis 56 t, bevorzugt 16 t, 24 t, 32 t, 40 t, 48 t, und/oder 56 t, umfasst, und/oder
   wobei die Mälzereinlage bis zu 7 Prozessmodule (5) pro Heizgebäude (1) umfasst.
7. Mälzereianlage nach einem der vorstehenden Aspekte, wobei jedes Prozessmodul (5) eine Wendevorrichtung (54) umfasst, und/oder
   eine Entladestation (55) umfasst, wobei die Entladestation (55) bevorzugt im Abschlussmodul (53) angeordnet ist.
8. Mälzereianlage nach einem der vorstehenden Aspekte, wobei das mindestens eine Prozessmodul (5) rechteckig und modular mittels Modulen (51, 52, 53) aufgebaut und erweiterbar ist.
9. Mälzereianlage nach einem der vorstehenden Aspekte, wobei die Module (51, 52, 53) eine Breite und eine Länge haben, wobei die Breite der Module (51, 52, 53) im Wesentlichen der Breite des Luftgebäudes (2) entspricht und die Länge des Prozessmoduls (5) abhängig von der Zahl der Module (51, 52, 53) ist.
10. Mälzereianlage nach einem der vorstehenden Aspekte, wobei das Korn in dem mindestens einen Prozessraum (6) auf einem luftdurchlässigen Hordenboden (62) angeordnet ist, der den Behandlungsraum (6) in einen unteren Abschnitt und einen oberen Abschnitt teilt, wobei der Ventilator (21) konfiguriert ist, die Luft durch den unteren Abschnitt einzuleiten, die Luft durch das Korn strömen zu lassen und durch den oberen Abschnitt zurück zum Ventilator (21) gelangen zu lassen.
11. Mälzereianlage nach einem der vorstehenden Aspekte, ferner mit einer Weiche (7) zum Weichen des Korns, wobei die Weiche (7) mit dem mindestens einen Prozessmodul (5) zum Transport des geweichten Korns in das Basismodul (51) und/oder ein Zwischenmodul (52) und/oder das Abschlussmodul (53) verbunden ist,
   wobei die Weiche (7) bevorzugt modular vergrößerbar ausgebildet ist.
12. Mälzereianlage nach einem der vorstehenden Aspekte, wobei das mindestens eine Heizgebäude (1) einen Ventilator zum Zirkulieren der in der Heizeinrichtung (11) temperierten Luft aufweist.
13. Verfahren zum Mälzen von Korn, insbesondere mit einer Mälzereianlage nach einem
   der vorstehenden Aspekte, mit den Schritten:
   Keimen des Korns in dem Prozessmodul (5), und
   Darren des Korns durch Erhitzen der Luft mittels der mindestens einen Heizeinrichtung (11), die in dem mindestens einen Heizgebäude (1) angeordnet ist und mit jedem der mindestens einem Prozessmodule (5) verbunden ist.
14. Verfahren nach Aspekt 13, unter Verwendung von mindestens zwei Prozessmodulen (5), wobei während des Darrens von Korn in einem der mindestens zwei Prozessmodule (5) das Keimen von Korn in dem anderen Prozessmodul (5) oder den anderen der mindestens zwei Prozessmodule (5) durchgeführt wird.
15. Verfahren zum Erweitern einer Mälzereianlage nach einem der Aspekte 1 bis 12, durch Erweitern eines bestehenden Prozessmoduls (5) durch Verlängern des Prozessmoduls (5), insbesondere durch Ergänzen von einem oder mehreren Zwischenmodulen (52) und/oder durch Bereitstellen eines zusätzlichen Prozessmoduls (5) und Verbinden des zusätzlichen Prozessmoduls (5) mit dem Heizgebäude (1).

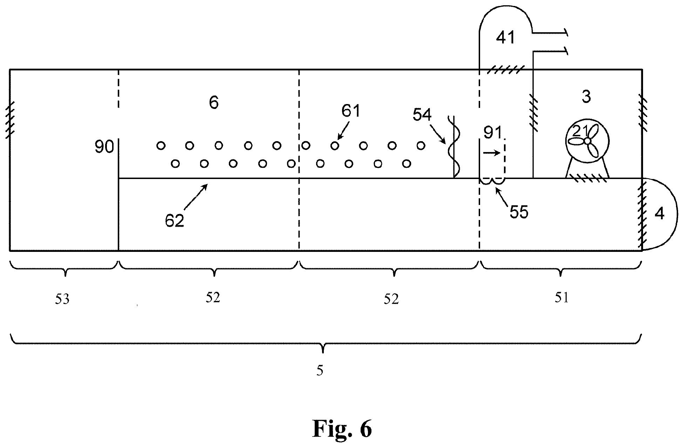

Im Folgenden werden nun unter Bezugnahme auf die Figuren 6 bis 8 weitere bevorzugte Ausführungsformen der vorliegenden Erfindung beschrieben.

Eine Mälzereianlage gemäß der bevorzugten Ausführungsform wird in Fig. 6 gezeigt und umfasst eine Weicheinheit 7, eine Keim-Darreinheit 5 und eine Heizeinheit 1, in dem eine Heizeinrichtung 11 installiert ist. Sowohl die Anzahl der Keim-Darreinheiten 5, als auch individuell betrachtet könne die Anzahl der Zwischenmodulen 52 in den Keim-Darreinheiten 5 in mehrfacher Ausführung bereitgestellt werden.

Sowohl die Weicheinheit 7, als auch die Keim-Darreinheit 5 kann den Anforderungen der jeweiligen Anlage angepasst werden und umfasst entsprechend ein Startmodul 51 mit einem Keim-Ventilator 21, einem Endmodul 53 und dazwischen den Prozessraum 6 mit mindestens zwei Zwischenmodulen 52. Der Prozessraum 6 ist ein standardisierter Saladin-Kasten (siehe beispielsweise Bergner, K.G. et al.: Alkoholische Genussmittel, Springer Berlin Heidelberg, 2013 (Handbuch der Lebensmittelchemie). Als Saladin-Kasten wird ein feststehender Hordenboden bezeichnet, auf dem das Produkt liegt und mit Luft durchströmt wird.

Die Keim-Darreinheit 5 wird durch ein Startmodul 51, mindestens zwei Zwischenmodule 52 und ein Endmodul 53 gebildet und kann gegebenenfalls durch Einsetzen von weiteren Zwischenmodulen 52 durch Versetzen des Endmoduls 53 ergänzt werden. Bei der Erweiterung der Keim-Darreinheit 5 wird das Endmodul 53 von dem existierenden Zwischenmodul 52, mit dem es verbunden ist, losgelöst. Hierbei werden die Schrauben der miteinander verbunden U-Profilen gelöst und das Endmodul versetzt. In diesem Zuge kann ebenfalls ein unter der Keim-Darreinheit 5 angeordneter Revisionsschacht für das Abwasser versetzt und das Kanalrohr um die Länge des Zwischenmoduls verlängert werden. Ebenso wird eine Pumpleitung von dem bereits existierenden Zwischenmodul zur Produktzuführung in das neue Zwischenmodul verlängert. Auch wird die Energiekette für die Wendevorrichtung 54 um die Länge des Zwischenmoduls verlängert. Das Startmodul 51, mindestens zwei Zwischenmodule 52 und das Endmodul 53 sind untereinander verbunden. Dabei stellen die Zwischenmodule 52 in deren Inneren einen Prozessraum 6 bereit, in dem das Keimen und Darren des Korns durchgeführt werden kann. Das Startmodul 51 ist ferner mit der Heizeinheit 1 verbunden.

Bevorzugt weist jedes Startmodul 51, Zwischenmodul 52 und Endmodul 53, im Folgenden auch als "Module" bezeichnet, die gleichen Abmessungen auf. Bevorzugt sind die Module rechteckig ausgeführt. Ferner können sie aus rostfreiem Edelstahl oder Blech-Biegeteilen oder Stahlträgern gebildet sein. Jedes Endmodul 53 ist dabei im Betrieb an drei Seiten geschlossen und über die offene Seite mit anderen Modulen verbindbar. Bevorzugt wird im Startmodul an der offenen Seite eine bewegliche Prozessraum-Endwand 91 angebracht, welche zurück in Richtung Startmodul 51 bewegt werden kann um unterhalb eine integrierte Entladevorrichtung 55 zu öffnen. Das Startmodul 51 ist an einer Seite sowie auch an der Decke mit der Heizeinheit 1 über Luftkanäle 4, 41 verbunden und an der gegenüberliegenden Seite offen und somit mit Zwischenmodulen 52 verbindbar. Die offene Seite des Startmoduls 51 wird über mindestens zwei Zwischenmodulen 52 mit dem Endmodul 53 verbunden. Jedes der Zwischenmodule 52 ist somit an zwei Seiten offen, damit es zwischen Startmodul 51 und Endmodul 53 angeordnet werden kann.

Bevorzugt weisen die Module eine Höhe von etwa 5 m, eine Breite von etwa 4,2 m auf und eine Länge von etwa 4,5 m auf. Maximal können 7 Zwischenmodule mit einer Länge von jeweils 4,5 m verwendet werden, was einer Gesamtlänge (Startmodul, 7 Zwischenmodule und Endmodul) von 7 x 4,5 m = 31,5 m entspricht. Insbesondere umfasst bevorzugt jedes der Module eine Kapazität von 4 bis 10 t, besonders bevorzugt 8 t. Spezifische Dichten von Getreide belaufen sich auf 45 - 54 kg/hl für Hafer, 57 - 70 kg/hl für Gerste, 58 - 77 kg/hl für Roggen und 62 - 87 kg/hl bei Weizen. Auch andere Abmessungen der Module können zweckdienlich sein.

In der Heizeinheit 1 können mindestens ein Wärmetauscher 22 und und ein Gasbrenner und/oder Wärmeregister für Dampf oder Heißwasser Verwendung finden. Eine Kälteanlage (nicht gezeigt) oder ein Kälteregister werden im Startmodul im integrierten Luftkanal installiert. Als Kältetechnik für die Keimluft kann beispielsweise ICS COOL ENERGY, **iC530 / iC660** eingesetzt werden (https://www.icscoolenergy.com/app/uploads/Broschuere_I-Chiller_ICSCoolEnergy_2018.pdf). Desweiteren umfasst die Mälzereianlage bzw. das Startmodul 51 einen integrierten Luftkanal 3, in welchem ein Keim-Ventilator 21 untergebracht ist und der mit dem Prozessraum 5 verbunden ist. In der Regel ist die Kälteanlage außerhalb des Prozessmoduls 5, und das Kälteregister beispielsweise im Luftkanal 3 auf einer Auslassseite (Druckseite) des Keim-Ventilators 21 untergebracht. Der Luftkanal 3 ist bevorzugt innerhalb des Startmoduls integriert. Besonders bevorzugt ist der Luftkanal 3 neben einem Schaltschrankraum im Startmodul untergebracht.

Als Heizeinrichtung 11 in der Heizeinheit 1 kann beispielsweise ein Brenner, ein Heißwasserregister oder ein Boiler verwendet werden. Weiterhin können andere Heizquellen, wie beispielsweise Geothermie (Erdwärme), Wärmepumpen oder Solaranlagen verwendet werden. Ein zusätzlicher Platten-Wärmetauscher kann beispielsweise die Abwärme benachbarter Industrien zur Erhöhung des Wirkungsgrades nutzen. Dieser kann in der Heizeinheit 1 beziehungsweise in Verbindungskanälen untergebracht werden. Bei Verwendung mindestens eines Kreuz-Wärmetauschers 22 wird vorwiegend die Abluft während des Schwelkvorganges beim Darren verwendet, um die Frischluft im Kreuzstromverfahren aufzuwärmen.

Im Prozessraum 6, gebildet durch mindestens zwei Zwischenmodulen 52, wird das Malz zum Keimen gebracht und anschließend getrocknet bzw. gedarrt. In der Regel ist dort ein luftdurchlässiger Hordenboden 62 angebracht, der den Behandlungsraum 6 in einen oberen und einen unteren Bereich teilt. Das Produkt 61 ist bevorzugt im oberen Bereich angeordnet und Luft wird in den unteren Bereich eingeleitet und kann durch den Hordenboden 62 in das Produkt 61 eindringen. Die Luft kann dabei je nach den Anforderungen temperiert werden. Bevorzugt verbindet der Luftkanal 3 das Startmodul 51 mit dem Zwischenmodul 52. Dabei ist der obere Bereich des Prozessraums 6 des Startmoduls 51 über den Luftkanal 3 und dem Keim-Ventilator 21 im Luftkanal 3 verbunden, der die Luft in den unteren Bereich des Prozessraums 6 transportiert. Mit anderen Worten wird die Abluft, die das Produkt 61 bereits passiert hat, aus dem oberen Bereich des Prozessraums 6 herausgeleitet und über den Keim-Ventilator 21 in den unteren Bereich des Prozessraums 6 rezirkuliert. Je nach Betriebsart (Keimen oder Darren) kann die Abluft durch den Luftkanal 3 (Keimen) oder über den mindestens einen Wärmetauscher 22 (bzw. Heizeinrichtung 11 in der Heizeinheit 1) und die Heizeinrichtung 11 zum Darr-Ventilator 24 geleitet werden. Hierzu können Vorrichtungen, insbesondere Abschlussklappen verwendet werden, die einerseits während des Keimens die Zu- und Abführung zum Startmodul 51 aus Richtung Wärmetauscher 22 bzw. Heizeinheit 1 verhindern und andererseits während des Darrens den Eintritt in den Luftkanal 3 bzw. von dem Luftkanal 3 den Lufteintritt über das Startmodul 51 in den Prozessraum unterbinden.

Dabei kann die Luft durch den/die Darr- und Keim-Ventilatoren wahlweise unverändert zirkuliert werden oder mittels der Kälteanlage 23 oder der Heizeinrichtung 11 in der Heizeinheit 1 temperiert werden. In der Heizeinheit kann ferner ein Wärmetauscher 22 angeordnet sein, um den Wirkungsgrad zu erhöhen. Dieser kann insbesondere als Kreuzwärmetauscher ausgeführt sein. Somit kann der Keimvorgang über den integrierten Luftkanal im Startmodul für jede Keim-Darreinheit 5 unabhängig stattfinden. Der Darrvorgang wiederrum wird über die Heizeinheit 1 mit temperierter Luft versorgt. In der Heizeinheit 1 befindet sich zudem auch der zentrale Darr-Ventilator 24, die Heizeinrichtung 11 und wahlweise auch mindestens ein (Kreuz-)Wärmetauscher 22. Bevorzugt sind im Startmodul 51 sowohl im Luftkanal 3 für das Keimen, als auch im Frischluftkanal 4 und Rückluftkanal 41 beim Darren Mittel vorgesehen (nicht gezeigt), um die Luft selektiv aus dem Luftkanal 3 (Umluft- oder Kühlbetrieb) oder von der Heizeinheit 1 bzw. der Heizeinrichtung 11 (Heizbetrieb) oder aus der Umgebung (Außenluft) in den Behandlungsraum 6 zu befördern. Insbesondere können diese Mittel als Jalousien oder Klappen ausgeführt sein. Diese können insbesondere in der Heizeinheit 1 integriert sein, an den Stellen, an denen auch die Kanäle, insbesondere der Rückluftkanal 41, angeordnet sind. Auch andere Vorrichtungen können zweckdienlich sein. Der Luftkanal 3 kann ferner eine Rückluftklappe, eine Frischluftklappe, einer Überdruckjalousie o.ä. aufweisen, um eine korrekte Luftzusammensetzung zu gewährleisten. Gemäß der beispielhaften Ausführungsform kann abhängig von den Umgebungsbedingungen Abluft aus dem Behandlungsraum 6 zirkuliert werden oder mit Frischluft gemischt werden. Ferner kann die Luft klimatisiert werden, um gleichbleibende Bedingungen gewährleisten zu können. Beispielsweise ist es in kalten Regionen während des Keimens möglicherweise nicht notwendig, die Außenluft zusätzlich zu kühlen. Im Gegenzug kann in kalten Regionen im Winter das Kälteregister auch mit Warm-/Heißwasser gefahren werden um die Frischluft/Außenluft anzuwärmen um auf die gewünschte Temperatur von 15 - 20°C zu kommen. Bevorzugt ist in der Anlage ein Temperatur- und/oder Feuchtigkeitssensor angebracht, um die Luftparameter überwachen zu können. Dieser kann im Luftkanal 3 und/oder im Frisch- 4 und Rückluftkanal und/oder im Heizeinheit 1 und/oder im Prozessraum 6 über und/oder unter der Horde angebracht sein. Ferner kann es vorteilhaft sein, die Bedingungen im Prozessraum 6 mit einem weiteren Sensor zu überwachen. Es können auch Sensoren vorgesehen sein, die direkt mit dem Produkt 61 in Kontakt stehen.

Ein beispielhafter Luftvolumenstrom während des Keimens beträgt bevorzugt 600 m³/h pro Tonne Getreide. Der Luftvolumenstrom erhöht sich nahezu linear in Abhängigkeit von der Getreidemenge. Während des Darrens wird der Luftvolumenstrom bevorzugt auf ca. 3000 m³/h pro Tonne Getreide erhöht. Auch hier kann der benötigte Volumenstrom nahezu linear anhand der Produktmenge berechnet werden. Die Temperaturen während des Keimens bzw. Darrens können je nach gewünschtem Produkt sehr unterschiedlich ausfallen. Die Temperatur beträgt während des Keimens insbesondere 15 -20 °C, während des Darrens insbesondere 80 - 120 °C.

Um eine gleichmäßige Keimung und Trocknung gewährleisten zu können, wird das Korn bzw. Malz mittels einer Wendevorrichtung 54 gewendet. Diese kann beispielsweise als schneckenförmige Wendevorrichtung 54 ausgeführt sein und durch an den Seitenwänden der Zwischenmodule 52 angebrachte Laufschienen durch den gesamten Prozessraum 6, insbesondere dessen gesamte Länge geführt bewegt werden. Eine geeignete Wendevorrichtung wird durch die Patentanmeldung EP 19 16 4503.5, angemeldet am 22. März 2019 durch die Bühler GmbH beschrieben. Das Korn kann auch während des Keimprozesses befeuchtet werden. Im Startmodul 51 kann ferner eine Entladestation 55, beispielsweise in Form einer integrierten Entladevorrichtung unterhalb der beweglichen Prozessraum-Endwand 91 angeordnet sein, die es erlaubt, das fertige Produkt 61 (Grünmalz nach Keimen oder Darrmalz nach Darren) zu entnehmen und weiter zu verarbeiten.

Soll die Batchgröße der Mälzereianlage beispielsweise stufenweise aufgrund gestiegener Nachfrage verändert werden, können ein oder mehrere Zwischenmodule 52 hinzugefügt oder entfernt werden, sofern die Heizkapazität der Heizeinrichtung 11 dies zulässt, d.h. ausreichend Hitze für die Behandlungsraumgröße zur Verfügung stellen kann.

Ferner können weitere Keim-Darreinheiten 5 mit einer Heizeinheit 1 verbunden werden, so dass mehrere Chargen gleichzeitig verarbeitet werden können. Dabei muss lediglich beachtet werden, dass die Batchgröße der zusätzlichen Keim-Darreinheiten 5 die Heizkapazität der Heizeinrichtung 11 nicht übersteigt.

Die Keim-Darreinheiten 5 umfassen somit bevorzugt als Basiskonfiguration je ein Startmodul 51, mindestens ein Zwischenmodul 52 und ein Endmodul 53. Die Keim-Darreinheiten 5 können je nach Anforderung ferner zwei, drei oder mehrere Zwischenmodule 52 aufweisen.

Falls eine Heizeinheit 1 bereitgestellt wird, ist eine Keim-Darreinheit 5 mit der Heizeinheit 1 verbunden, während mögliche weitere Keim-Darreinheiten 5 über einen oder mehrere Frischluftkanäle 4 und Rückluftkanäle 41 mit der Heizeinheit 1 verbunden sind. In diesem Beispiel ist nur in dem mit der Heizeinheit 1 verbundenen Startmodul 51 ein Wärmetauscher 22 angeordnet.

Eine Keim-Darreinheit 5 wird über Frischluftkanäle 4 und Rückluftkanäle 41 mit der Heizeinheit 1 verbunden. Falls weitere Keim-Darreinheiten 5 in der Anlage vorgesehen sind, sind diese über den einen oder mehrere Frischluftkanäle 4 und Rückluftkanäle 41 mit der Heizeinheit 1 verbunden.

Die Anlage kann somit mit einer Heizeinheit 1 bis zu sieben Keim-Darreinheiten 5 (24h-Batchzyklus) erweitert bzw. verkleinert werden.

In einer Weiche bzw. Weicheinheit, die auch Teil der Mälzereianlage sein kann, wird Korn geweicht und so für die nachfolgende Verarbeitung vorbereitet. Von der Weicheinheit vorbereitetes Korn wird zu ein oder mehreren Keim-Darreinheiten 5 befördert. Beispielsweise kann das Korn durch mit ein oder mehreren Keim-Darreinheiten 5 verbundene Rohrleitungen zusammen mit dem Weichwasser in das oder die mehreren Zwischenmodule 52, also in den Prozessraum 6 zum Keimen und Darren befördert werden. Mehrere Zwischenmodule 52 (Prozessräume 6) können nacheinander befüllt werden. Im anschließenden Keimbetrieb wird durch den Keim-Ventilator 21 Luft in den unterhalb des Hordenbodens 62 gelegenen Bereich des Prozessraums 6 geleitet. Die Luft kann durch den Hordenboden 62 das Produkt 61 von unten durchdringen. Nach dem Passieren des Produkts wird die Abluft zum Keim-Ventilator 21 im Luftkanal 3 des Startmoduls 51 geführt, wo sie rezirkuliert und/oder temperiert und/oder mit Frischluft gemischt wird. Das Temperieren kann dabei abhängig von den Bedingungen der Außenluft das Kühlen mittels der Kälteanlage 23 bzw. das Erwärmen der Keimluft (in sehr kalten Winterzeiten bzw. niedriegen Außentemperaturen) durch Umfunktionieren des Kälteregisters der Kälteanlage zu einem Warmwasserregister umfassen. Ferner kann die Abluft auch abgeführt werden und nur Frischluft in den Prozessraum 6 eingeleitet werden.

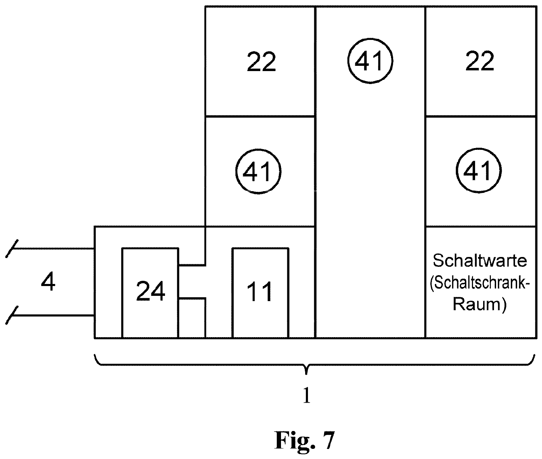

Im Darrbetrieb. wird von der Heizeinrichtungen 11 aus der Heizeinheit 1, wie in Figur 7 dargestellt, geheizte Luft mittels des Darr-Ventilators 24 durch den Frischluftkanal 4 in den unterhalb des Hordenbodens 62 gelegenen Bereich des Prozessraums 6 geleitet und kann durch den Hordenboden 62 das Produkt 61 durchdringen. Danach wird die Abluft durch den Rückführkanal 41 dem mindestens einen Wärmetauscher 22 zugeführt. Dort kann beispielsweise Wärmerückgewinnung oder Wärmeerhalt unter Zufuhr von Frischluft durchgeführt werden. Die Luft wird dann in der Heizeinrichtung 11 in der Heizeinheit 1 erhitzt und durch den Darr-Ventilator 24 wieder in den Prozessraum 6 geleitet. Bevorzugt ist im Darrbetrieb der Luftkanal 3 vom Startmodul geschlossen und/oder wird nicht verwendet. In der Heizeinheit 1 kann zusätzlich eine Schaltwarte, also ein Schaltschrankraum zur Steuerung der Heizeinheit vorgesehen sein.

Nach Abschluss des Darrvorgangs kann das Produkt 61 manuell oder automatisiert über die integrierte Entladestation im Startmodul 51 aus dem Prozessraum 6 entfernt werden.

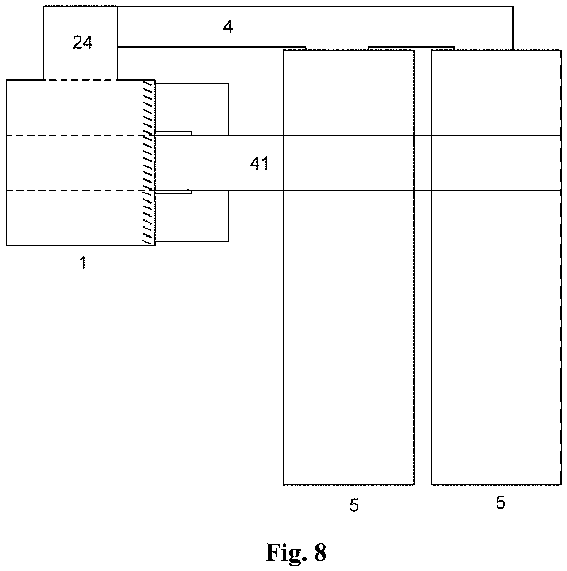

Figur 8 zeigt schematisch eine Draufsicht einer Mälzereianlage gemäß einer Ausführungsform der Erfindung. Eine Heizeinheit 1, wie sie beispielsweise in Figur 7 gezeigt ist, ist über einen Frischluftkanal 4 mit zwei Keim-Darreinheiten 5 verbunden. Der Luftstrom aus der Heizeinheit 1 in die Keim-Darreinheiten 5 wird während des Darrvorgangs durch den Darr-Ventilator 24 geliefert. Nach dem Durchströmen der Prozessräume in den Keim-Darreinheiten 5 wird die Luft über den Rückführkanal 41 zurück in die Heizeinheit 1 geführt.

Im Folgenden wird auch für die bevorzugte Ausführungsform ein Beispiel beschrieben, in dem die Kapazität der Mälzereianlage vollständig ausgenutzt wird. In diesem Beispiel wird wieder angenommen, dass Chargen à 24 t mit einer Keimdauer von 5 Tagen zuzüglich eines Tages zum Darren produziert werden. Je nach gewünschtem Produkt 61 und Region kann die Keimdauer abweichen. Ferner wird angenommen, dass jedes Modul eine Kapazität von 8 t hat. Um durchgängig und bei voller Auslastung die beispielhaft gewünschten Chargen à 24 t produzieren zu können, muss die beispielhafte Mälzereianlage sechs Keim-Darreinheiten 5 aufweisen, die jeweils aus einem Startmodul 51, mindestens drei Zwischenmodulen 52 und einem Endmodul 53 bestehen. Ferner muss die Anlage eine Heizeinheit 1 mit einer Heizeinrichtung 11 und einem zentralen Darr-ventilator 24 aufweisen, die für 24 t Produkt ausreichend dimensioniert ist. Jedes der sechs Startmodulen 51 muss ferner sowohl mit der Weicheinheit 7 als auch mit der Heizeinheit 1 verbunden werden. Während der Produktion ist in rotierender Weise eines der Keim-Darreinheiten 5 im Darrmodus und bezieht Wärme von der Heizeinrichtung 11 aus der Heizeinheit 1, während die verbleibenden fünf Keim-Darreinheiten 5 jeweils um einen Tag versetzt im Keimmodus sind und sich somit im Umluft- oder Kältebetrieb befinden. Die Keim-Darreinheit 5, in welchem Korn gedarrt wurde, wird nach der Entleerung mit neuem Korn kommend von der Weicheinheit 7 zum Keimen befüllt und jene Keim-Darreinheit 5, in welcher das Korn 5 Tage gekeimt hat, wird in den Darrmodus versetzt. Auf diese Weise kann kontinuierlich und platzoptimiert produziert werden.

Die oben bereits beschrieben Figur 4 kann auch also schematische Draufsicht auf eine Mälzereianlage gemäß der bevorzugten Ausführungsform der Erfindung verstanden werden. Für die angegebenen Bezugszeichen werden in der folgenden Beschreibung der bevorzugten Ausführungsform die Bezeichnungen entsprechend verwendet. Bezüglich der funktionellen Merkmale wird auf die Beschreibung oben verwiesen. Gemäß der bevorzugten Ausführungsform weist die Mälzereianlage eine Heizeinheit 1 auf, die mit zwei Startmodulen 51 von zwei Keim-Darreinheiten 5 verbunden ist. Eine der Keim-Darreinheiten 5 weist neben einem Start- 51 und Endmodul 53, zwei Zwischenmodule 52 auf. Die zweite Keim-Darreinheit weist neben Start- 51 und Endmodul 53 vier Zwischenmodule 52 auf. Beide Keim-Darreinheiten 5 sind sowohl mit der Weicheinheit 7 als auch mit der Heizeinheit 1 verbunden.

Eine Wärmerückführung kann über einen Rückluftkanal 41 von den Keim-Darreinheiten 5 zurück zur Heizeinheit 1 durchgeführt werden. Somit können mit einer Heizeinrichtung 11 in einer Heizeinheit 1, zwei Behandlungsräume 6 mit Hitze versorgt werden. Wie oben beschrieben ist die gezeigte Mälzereianlage modular und erweiterbar ausgeführt.

In der ebenfalls oben bereits beschriebenen Figur 5 ist eine weitere beispielhafte Ausführungsform zur Verdeutlichung der Erweiterungsmöglichkeiten der vorliegenden Erfindung gezeigt, die auch in Bezug auf die bevorzugte Ausführungsform wie folgt dargestellt werden kann. Gleiche oder ähnliche Elemente werden wieder mit den gleichen Bezugszeichen wie in den vorherigen Figuren versehen. Wie oben beschrieben kann die Anlage modular erweitert oder verkleinert werden. In diesem Beispiel kann jedes Modul wieder bis zu 8 t Produkt fassen. Die in Figur 5 gezeigte Mälzereianlage weist eine Heizeinheit 1 sowie fünf Keim-Darreinheiten auf. Jede der Keim-Darreinheiten weist ein Startmodul 51, gegebenenfalls Zwischenmodule 52 und ein Endmodul 53 auf. Die Keim-Darreinheiten sind über den Frischluftkanal 4 mit den Heizeinheit 1 verbunden und können durch den zentralen Darr-Ventilator 24 die Hitze in den Prozessraum in eines der fünf Keim-Darr-einheiten einleiten. Eine Wärmerückführung kann über den Rückluftkanal 41 bewerkstelligt werden, der wiederum mit allen Keim-Darreinheiten verbunden ist.

Jede Keim-Darreinheit weist einen integrierten Luftkanal im Startmodul 51 auf. Die Keim-Darreinheit links weist lediglich ein Startmodul 51 und ein Endmodul 53 auf, und hat ein Fassungsvermögen von 16 t Produkt. Die danebengelegene Keim-Darreinheit hat zusätzlich ein Zwischenmodul 52, wodurch sich eine Chargengröße von 24 t ergibt. Die danebenstehenden Keim-Darreinheiten haben eine Kapazität von jeweils 48 t (vier Zwischenmodule 52). Eine Keim-Darreinheit mit der Maximalkapazität von 56 t könnte sieben Zwischenmodule 52 aufweisen (nicht gezeigt). Die letzte Keim-Darreinheit 5 rechts hat eine Größe von 24 t (ein Zwischenmodul 52). Wird, wie dies gemäß der oben beschriebenen bevorzugten Ausführungsform vorgesehen, der Prozessraum nur durch die Zwischenmodule gebildet, ist das obige Beispiel entsprechend anzupassen. In diesem Fall umfasst die Minimalkonfiguration ein Zwischenmodul mit Start- und Endmodul, die Standardkonfiguration weist zwei Zwischenmodule auf und kann bis zu einer Größe von sieben Zwischenmodulen erweitert werden.

Da im obigen Beispiel die Heizeinrichtungen 11 jeweils auf eine Maximalkapazität von 56 t eingerichtet sind, können bei Verwendung der Heizeinrichtung 11 mit dieser auch alle anderen (kleineren) Keim-Darreinheiten 5 ausreichend mit Hitze von einer Heizeinheit 1 versorgt werden. Daher können gemäß der vorliegenden Erfindung die Heizeinheit 1 über den Frischluftkanal 4 alle Keim-Darreinheiten 5, unabhängig der Kapazität, abhängig davon, welche der Keim-Darreinheiten- 5 im Darrmodus betrieben wird, durch den Betrieb nur einer oder beider Heizeinrichtungen 11 von der Heizeinheit mit einer ausreichenden Hitze versorgt werden.

Die beschriebenen Beispiele verdeutlichen die Vielseitigkeit der vorliegenden Erfindung. Weiterhin können, wie oben beschrieben, die in Fig. 4 und 5 gezeigten Konfigurationen unter Berücksichtigung der Heizkapazität erweitert oder verkleinert werden. Der zentrale Darr-Ventilator kann die aufgeheizte Luft von der Heizeinheit über die Verbindungskanäle in die Keim-Darreinheit verteilen. Die Bereitstellung eines Luftkanals 3 mit Keim-Ventilator 21 pro Keim-Darreinheit 5 gewährleistet die Unabhängigkeit der einzelnen Keim-Darreinheiten. Der in der Heizeinheit vorgesehene Wärmetauscher 22 kann den Wirkungsgrad der Anlage erhöhen. Je nach Klima und Umgebungstemperatur, d.h. Standort der Anlage, kann Außenluft verwendet, der zirkulierenden Luft beigemischt oder temperiert werden.

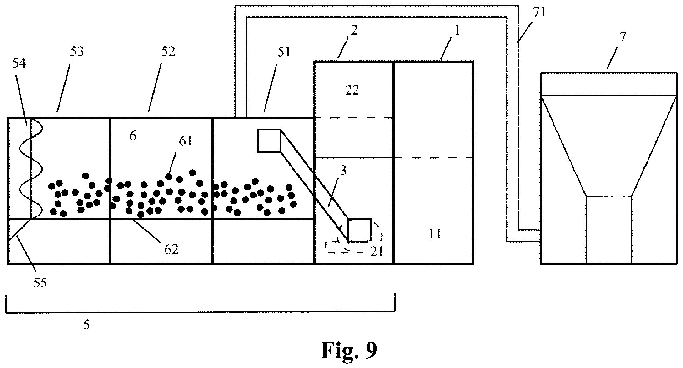

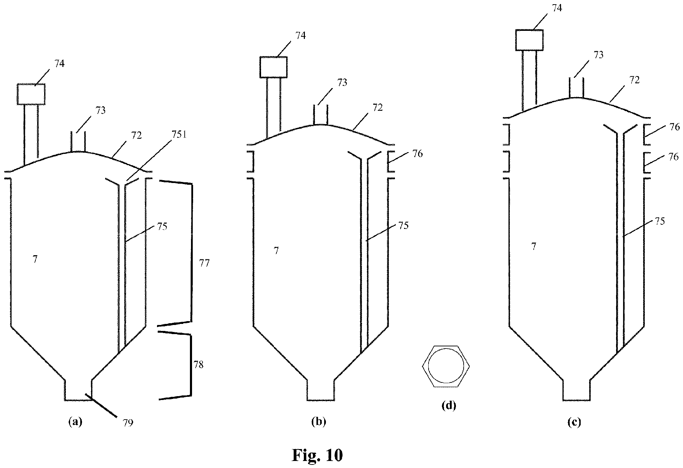

Figur 9 zeigt eine schematische Ansicht einer Mälzereianlage wie zuvor beschrieben. Diese weist zusätzlich eine Weiche bzw. Weicheinheit 7 auf, die als Teil der Mälzereianlage oder extern bereitgestellt sein kann. Unterhalb der Weicheinheit 7 kann ein Frischwasserreservoir untergebracht sein. Bezüglich der Funktionsweise der Weiche 7 wird nach oben verwiesen. Eine beispielhafte Ausführungsform einer Weiche 7 wird mit Bezug auf Figur 10 unten beschrieben. Das geweichte Korn kann über eine Pumpleitung 71 nass in den Behandlungs- bzw. Prozessraum 6, sprich eines der Module 51, 52, 53, bzw. - im Falle der bevorzugten Ausführungsform - eines der Zwischenmodule 52 gepumpt werden. Im Falle eines Trockentransports von der Weiche zu den Behandlungsräumen können Förderbänder, Trogkettenförderer, Schneckenförderer, Rohrkettenförderer oder Elevatoren eingesetzt werden. Es kann auch zweckdienlich sein, das Korn direkt im Behandlungs- bzw. Prozessraum 6 zu weichen. Hierfür kann insbesondere eine Waschschnecke, vor Eintritt des Korns in das Prozessmodul bzw. die Keim-Darreinheit 5, vorgesehen sein.

Figur 10 zeigt eine schematische Ansicht einer erweiterbaren Weiche bzw. Weicheinheit 7, die mit der beschriebenen Mälzereianlage kombiniert werden kann. Hierfür wird beispielhaft eine zylindrokonische Weiche 7 beschrieben. Figur 10(a) zeigt die Grundkonfiguration der Weiche 7 für die kleinste Chargengröße. Die zylindrokonische Weiche 7 weist einen Deckel 72 auf, an dem ein Produktzulauf 73 zum Einfüllen des Korns sowie eine Einrichtung zur Frischluftzufuhr 74 vorgesehen sein können. In der Einrichtung zur Frischluftzufuhr 74 kann ferner einen Kälteregister zum Temperieren der Zuluft vorgesehen sein. Im Inneren der zylindrokonische Weiche 7 ist bevorzugt eine vollautomatische Abschwemmvorrichtung 75 vorgesehen. Bevorzugt weist diese auch einen Sicherheitsüberlauf 751 auf. Insbesondere werden über die Abschwemmvorrichtung 75 Schwimmgerste, Staub und andere schwimmende nicht keimfähige Teile entfernt. Das geweichte Korn wird nach dem Weichprozess gravimetrisch über die Öffnung 79 am Konusboden ausgeweicht und zur weiteren Verarbeitung transportiert.

Falls die Mälzereianlage wie oben beschrieben vergrößert wird, kann es notwendig sein, die Kapazität der Weiche 7 entsprechend anzupassen. Hierfür können ein oder mehrere Zwischenringe 76 verbaut werden, um das Volumen und somit die Produktkapazität der zylindrokonische Weiche 7 zu vergrößern. Figur 10(b) zeigt eine Konfiguration der Weiche 7 aus Figur 10(a) mit einem zusätzlichen Zwischenring 76. Um diesen zu montieren, wird zunächst der Deckel 72 mit dem angebrachten Produktzulauf 73 und Frischluftzufuhr 74 entfernt. Im Folgenden werden ein oder mehrere Zwischenringe 76 auf der zylindrokonischen Weiche 7 platziert. Figur 10(c) ist eine Darstellung mit zwei montierten Zwischenringen 76. Die Zwischenringe 76 können beispielsweise mittels einer Schraubverbindung und einer Dichtung mit der zylindrokonischen Weiche 7 bzw. mit dem weiteren Zwischenring 76 verbunden werden. Die Verbindungen zwischen Weichenzylinder und Zwischenringen bzw. dem Deckel können alternativ verschweißt werden. Ferner kann die Höhe bzw. Länge der Abschwemmvorrichtung 75 entsprechend angepasst werden. Dies kann beispielsweise durch Austausch des Trichters und der Rohrstücke vollzogen werden. Es kann auch eine weitere Weiche vorgesehen sein.

Die Weicheinheit 7 kann also insbesondere einen konischen Basisabschnitt 78, einen zylindrischen Deckel 72 und einen ringförmigen Zwischenabschnitt 77 aufweisen. Die Kapazität der Weicheinheit 7 kann stufenweise durch Einsetzen oder Entnehmen von Zwischenringen 76 im Zwischenabschnitt 77 vergrößert bzw. verkleinert werden. Um ausreichende Stabilität der Weicheinheit 7 zu gewährleisten, weist die Weicheinheit 7 insbesondere im Bereich der Zwischenringe 76 im Querschnitt bevorzugt eine im Wesentlichen kreisförmige Innenwand und eine sechseckige Außenwand auf, wie in der Querschnittsansicht in Figur 10(d) gezeigt.

Alle beschriebenen Anlagen können, wie in Figur 4 gezeigt, auch mit Röstanlagen kombiniert werden.

Als Heizeinrichtung 11 kann anstelle eines Brenners auch eine Kesselanlage (Boiler Plant) verwendet werden. Diese kann mit Wasser oder Dampf betrieben werden. Die Anlage kann mit Gas, Öl, Holzpellets oder Hackschnitzel bzw. anderen Beheizungssystemen betrieben werden, um somit Wasser soweit zu temperieren, dass dieses Heißwasser bzw. Dampf die Dampf- bzw. Wasserregister versorgen kann. In diesem Fall wird auf Saugseite des Darr-Ventilators 24 in der Heizeinheit 1 ein Dampfregister montiert. Es kann auch ein Wärmetauschregister, welches beispielsweise nach dem Gegenstromprinzip arbeitet, vorgesehen sein.

Ferner kann der Wärmetauscher 22 oder Kreuzwärmetauscher durch eine Wärmepumpe ersetzt werden. Diese benötigt, auch bei einem Betrieb mit einem Brenner, Register auf Saugseite des Darr-Ventilators 24 in der Heizeinheit 1. Die Wasser- oder Dampfregister sind bevorzugt auf der Ansaugseite des zentralen Darr-Ventilators 24 in der Heizeinheit 1 installiert. Die Wärmepumpe wird bevorzugt nur für den Darrmodus eingesetzt. Somit können der Wirkungsgrad und die Energieeffizienz erhöht werden. Dies führt dazu, dass eine kleiner dimensionierte Heizeinrichtung 11, Brenner oder Kesselanlage, verwendet werden kann. Des Weiteren kann die Wärmepumpe mit Elektrizität einer Photovoltaikanlage versorgt werden.

Die vorliegende Offenbarung umfasst auch ein entsprechendes Verfahren zum Mälzen von Korn sowie ein Verfahren zum Erweitern einer Mälzereianlage.

Insbesondere wird für das Verfahren bevorzugt eine Mälzereianlage wie oben beschrieben verwendet. Das Verfahren umfasst das Weichen des Korns in einer Weicheinheit, das Keimen des Korns individuell in einem unabhängigen von anderen Keim-Darreinheiten 5, Keim-Darreinheit 5. Und das Darren des Korns durch Erhitzen der Luft mittels einer Heizeinrichtung 11, die in Heizeinheit 1 angeordnet ist und mit jeder der mindestens einer Keim-Darreinheit 5 verbunden ist.

Das Verfahren kann unter Verwendung von mindestens einer Weicheinheit 7, einer Keim-Darreinheit 5 sowie einer Heizeinheit 1, durchgeführt werden, wobei die Weicheinheit 1 unabhängig von der Keim-Darreinheit 5 durchgeführt werden kann. In der kombinierten Keim-Darreinheit kann entweder der Keimprozess oder der Darrprozess durchgeführt werden.

Das Verfahren zum Erweitern einer Mälzereinanlage wie oben beschrieben umfasst das stufenweise Erweitern der Batchkapazität durch Verlängern der Keim-Darreinheit 5, insbesondere durch Ergänzen von einem oder mehreren Zwischenmodulen 52 und/oder durch Bereitstellen einer oder mehrerer zusätzlichen Keim-Darreinheiten 5 und Verbinden des/der zusätzlichen Keim-Darreinheiten 5 mit der Heizeinheit 1.

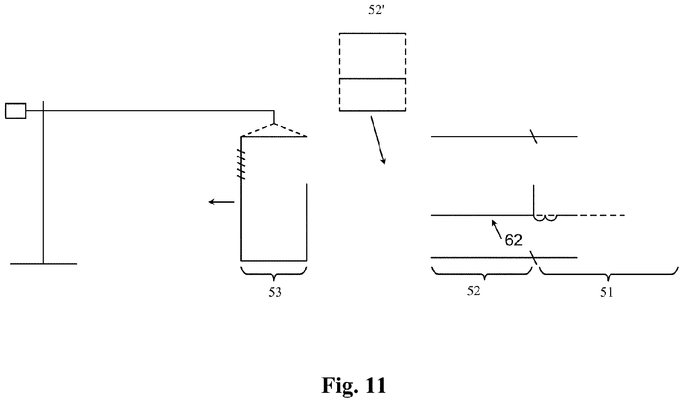

Das erfindungsgemäße Erweiterungs-Verfahren ist schematisch in Figur 11 dargestellt. In einer Keim-Darreinheit einer bestehenden Mälzereianlage, wie sie beispielsweise in Figur 6 dargestellt ist, werden die Module zunächst getrennt. In der gezeigten Ausführungsform wird das vorhandene Zwischenmodul 52 vom Endmodul 53 getrennt, während das Zwischenmodul mit dem Startmodul 51 in Verbindung bleibt. Das Endmodul 51 ist in Figur 11 nur angedeutet, entspricht aber dem Endmodul 53 aus Figur 6, weist also insbesondere ebenfalls die entsprechenden Kanäle, den Ventilator und die Entladestation auf. Natürlich kann zur Erweiterung der Mälzereianlage auch das Zwischemodul am Endmodul verbleiben, aber vom Startmodul getrennt werden. Das entfernte Modul wird von den verbleibenden Modulen entfernt und ein weiters Zwischenmodul 52' wird zwischen dem abgenommene (End-)Modul und dem vorher bereits vorhandene Zwischenmodul 52 angeordnet. Die Wände, Decken und Böden der Module werden bevorzugt durch U-Profile gebildet. Somit können diese mit den neu eingesetzten U-Profilen, die die gleichen Abmessungen besitzen, also den weiteren Zwischenmodulen 52 verbunden und vorzugsweise verschraubt werden. Durch Einsetzten weiterer Zwischenmodule 52 kann der Prozessraum 6 der Mälzereianlage 1 stufenweise erweitert werden.

In der EP 2 336 458 B1 wird ein Verfahren zur Herstellung eines Behälters zum Keimen oder Darren von Malz aus mehreren Wandelementen beschrieben. Die dort gezeigten Verfahren und Vorrichtungen sind zwar in Bezug auf Rundbehälter beschrieben, können jedoch entsprechend auch für Keim-Darreinheiten gemäß der vorliegenden Erfindung eingesetzt werden.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang der folgenden Ansprüche zu verlassen. Insbesondere umfasst die Erfindung ebenfalls Ausführungsformen mit jeglicher Kombination von Merkmalen, die vorstehend zu verschiedenen Aspekten und/oder Ausführungsformen genannt oder gezeigt sind.

Die Erfindung umfasst ebenfalls einzelne Merkmale in den Figuren auch wenn sie dort im Zusammenhang mit anderen Merkmalen gezeigt sind und/oder vorstehend nicht genannt sind.

Im Weiteren schließt der Ausdruck "umfassen" und Ableitungen davon andere Elemente oder Schritte nicht aus. Ebenfalls schließt der unbestimmte Artikel "ein" bzw. "eine" und Ableitungen davon eine Vielzahl nicht aus. Die Funktionen mehrerer in den Ansprüchen aufgeführter Merkmale können durch eine Einheit erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Alle Bezugszeichen in den Ansprüchen sind nicht als den Umfang der Ansprüche einschränkend zu verstehen.

### Liste der Bezugszeichen

- 1: Heizgebäude bzw. Heizeinheit
- 11: Heizeinrichtung
- 2: Luftgebäude
- 21: (Keim-)Ventilator
- 22: Wärmetauscher
- 23: Kälteanlage
- 24: (Darr-)Ventilator
- 3: Luftkanal
- 4: Verbindungs- bzw. Frischluftkanal
- 41: Rückführ- bzw. -luftkanal
- 5: Prozessmodul bzw. Keim-Darreinheit
- 51: Basismodulbzw. Startmodul
- 52: Zwischenmodul
- 53: Abschluss- bzw. Endmodul
- 54: Wendevorrichtung
- 55: Entladeklappe bzw. Entladestation
- 6: Behandlungs- bzw. Prozessraum
- 61: Produkt
- 62: Hordenboden
- 7: Weiche bzw. Weicheinheit
- 71: Pumpleitung
- 72: Deckel
- 73: Produktzulauf
- 74: Frischluftzufuhr
- 75: Abschwemmvorrichtung
- 751: Sicherheitsüberlauf
- 76: Zwischenring
- 77: Zwischenabschnitt
- 78: Basisabschnitt
- 79: Produktablauf
- 8: Röstanlage
- 81: Transportvorrichtung
- 91: bewegliche Prozessraum-Endwand

## Patentansprüche

1. Weiche (7) zum Weichen von Korn, mit
einem Basisabschnitt (78) und einem Deckel (72),
wobei die Kapazität der Weiche stufenweise durch Einsetzen oder Entnehmen von mindestens einem Zwischenring (76) in einem Zwischenabschnitt (77) zwischen dem Basisabschnitt (78) und dem Deckel (72) veränderbar ist.

2. Weiche (7) nach Anspruch 1, ferner mit einem Produktablauf (79), der im Basisabschnitt (78) angeordnet ist.

3. Weiche (7) nach Anspruch 2, wobei der Basisabschnitt (78) konisch in Richtung des Produktablaufs ausgebildet ist und/oder wobei der Zwischenabschnitt (77) und der mindestens eine Zwischenring (76) ringförmig ausgebildet sind.

4. Weiche (7) nach Anspruch 1, 2 oder 3, wobei der Zwischenabschnitt (77) und der mindestens eine Zwischenring (76) eine im Querschnitt im Wesentlichen kreisförmige Innenwand aufweisen.

5. Weiche (7) nach einem der vorstehenden Ansprüche, wobei der Zwischenabschnitt (77) und der mindestens eine Zwischenring (76) eine im Querschnitt im Wesentlichen sechseckige Außenwand aufweisen.

6. Weiche (7) nach einem der vorstehenden Ansprüche, wobei die Weiche ferner eine Abschwemmvorrichtung (75) aufweist, wobei die Abschwemmvorrichtung (75) vorzugsweise vollautomatisch betrieben wird, und
wobei die Abschwemmvorrichtung (75) bevorzugt einen Sicherheitsüberlauf (751) aufweist.

7. Weiche (7) nach Anspruch 6, wobei eine Höhe oder Länge der Abschwemmvorrichtung (75) in Abhängigkeit der Anzahl der eingesetzten Zwischenringe (76) eingestellt werden kann.

8. Weiche (7) nach einem der vorstehenden Ansprüche, wobei der Deckel (72) einen Produktzulauf (73) aufweist.

9. Weiche (7) nach einem der vorstehenden Ansprüche, wobei der Deckel (72) eine Einrichtung zur Frischluftzufuhr (74) aufweist.

10. Weiche (7) nach Anspruch 9, wobei die Einrichtung zur Frischluftzufuhr (74) ein Kälteregister aufweist, das konfiguriert ist, Zuluft zu temperieren.

11. Verfahren zum Erweitern einer Weiche (7) nach einem der vorstehenden Ansprüche, durch eine stufenweise Veränderung der Kapazität der Weiche (7) durch Einsetzen oder Entfernen von mindestens einem Zwischenring (76) in dem Zwischenabschnitt (77) zwischen dem Basisabschnitt (78) und dem Deckel (72).

## Claims

1. A steeping unit (7) for steeping of grain, comprising
a base section (78) and a lid (72),
wherein the capacity of the steeping unit can be adjusted in a stepwise manner by inserting or removing at least one intermediate ring (76) in an intermediate section (77) between the base section (78) and the lid (72).

2. The steeping unit (7) according to claim 1, further comprising a product outlet (79) arranged within the base section (78).

3. The steeping unit (7) according to claim 2, wherein the base section (78) is conical in the direction of the product outlet and/or wherein the intermediate section (77) and the at least one intermediate ring (76) are ring-shaped.

4. The steeping unit (7) according to claim 1, 2 or 3, wherein the intermediate section (77) and the at least one intermediate ring (76) have an inner wall that is essentially circular in cross-section.

5. The steeping unit (7) according to any one of the preceding claims, wherein the intermediate section (77) and the at least one intermediate ring (76) have an outer wall that is essentially hexagonal in cross-section.

6. The steeping unit (7) according to any one of the preceding claims, the steeping unit further comprising a skimming device (75), wherein the skimming device (75) is preferably operated fully automatically, and
wherein the skimming device (75) preferably has a safety overflow (751).

7. The steeping unit (7) according to claim 6, wherein a height or length of the skimming device (75) can be adapted depending on the number of intermediate rings (76) used.

8. The steeping unit (7) according to any one of the preceding claims, wherein the lid (72) comprises a product feed (73).

9. The steeping unit (7) according to any one of the preceding claims, wherein the lid (72) comprises a device for fresh air supply (74).

10. The steeping unit (7) according to claim 9, wherein the device for fresh air supply (74) comprises a cooling coil configured to temperature-control fresh air.

11. A method for expanding a steeping unit (7) according to any one of the preceding claims by adjusting the capacity of the steeping unit (7) in a stepwise manner by inserting or removing at least one intermediate ring (76) in the intermediate section (77) between the base section (78) and the lid (72).

## Revendications

1. Unité d'amollissement (7) pour l'amollissement de céréales, comprenant :
une partie de base (78) et un couvercle (72),
où la capacité de l'unité d'amollissement peut être modifiée par étapes en insérant ou en retirant au moins un anneau intercalaire (76) dans une partie intermédiaire (77) entre la partie de base (78) et le couvercle (72).

2. Unité d'amollissement (7) selon la revendication 1, comprenant en outre une sortie de produit (79) disposée dans la partie de base (78).

3. Unité d'amollissement (7) selon la revendication 2, où la partie de base (78) est conique dans la direction de la sortie de produit et/ou où la partie intermédiaire (77) et ledit au moins un anneau intercalaire (76) sont prévus de forme annulaire.

4. Unité d'amollissement (7) selon la revendication 1, la revendication 2 ou la revendication 3, où la partie intermédiaire (77) et ledit au moins un anneau intercalaire (76) présentent une paroi intérieure de section transversale sensiblement circulaire.

5. Unité d'amollissement (7) selon l'une des revendications précédentes, où la partie intermédiaire (77) et ledit au moins un anneau intercalaire (76) présentent une paroi extérieure de section transversale sensiblement hexagonale.

6. Unité d'amollissement (7) selon l'une des revendications précédentes, ladite unité d'amollissement comportant en outre un dispositif de déversement (75), ledit dispositif de déversement (75) étant de préférence actionné de manière entièrement automatique, et où ledit dispositif de déversement (75) présente de préférence un trop-plein de sécurité (751).

7. Unité d'amollissement (7) selon la revendication 6, où la hauteur ou la longueur du dispositif de déversement (75) peuvent être ajustées en fonction du nombre d'anneaux intercalaires (76) utilisés.

8. Unité d'amollissement (7) selon l'une des revendications précédentes, où le couvercle (72) présente une arrivée de produit (73).

9. Unité d'amollissement (7) selon l'une des revendications précédentes, où le couvercle (72) présente un dispositif d'alimentation en air frais (74).

10. Unité d'amollissement (7) selon la revendication 9, où le dispositif d'alimentation en air frais (74) présente un registre de refroidissement prévu pour tempérer l'air entrant.

11. Procédé d'extension d'une unité d'amollissement (7) selon l'une des revendications précédentes, par modification progressive de la capacité de l'unité d'amollissement (7) en insérant ou en retirant au moins un anneau intercalaire (76) dans la partie intermédiaire (77) entre la partie de base (78) et le couvercle (72).
